# EUROPEAN PATENT APPLICATION

(11) **EP 4 814 660 A1**
(43) Date of publication of application: **30.09.2026**
(21) Application number: 24907847.8
(22) Date of filing: 27.11.2024
(51) Int. Cl.: G06F 3/01, G06V 20/20, G06F 3/00, G06V 40/18, G06F 3/04815, H04W 4/80, G02B 27/01, G06T 19/00

(54) **EXTENDED REALITY DEVICE AND OPERATION METHOD THEREOF**

(30) Priority: 18.12.2023 KR 20230185089
(71) Applicant: Samsung Electronics Co., Ltd., Suwon-si, Gyeonggi-do 16677 (KR)
(72) Inventor: KIM, Doyoun, Suwon-si, Gyeonggi-do 16677 (KR); KOO, Bonkon, Suwon-si, Gyeonggi-do 16677 (KR); KWON, Dongwook, Suwon-si, Gyeonggi-do 16677 (KR); RYU, Jaeyeol, Suwon-si, Gyeonggi-do 16677 (KR); SHIN, Sunghwan, Suwon-si, Gyeonggi-do 16677 (KR); JEONG, Youngmo, Suwon-si, Gyeonggi-do 16677 (KR); CHOI, Jongchul, Suwon-si, Gyeonggi-do 16677 (KR)
(74) Representative: Appleyard Lees IP LLP
(86) International application number: PCT/KR2024/018968
(87) International publication number: WO 2025/135562

(57) **Abstract**

Disclosed is an operation method of an extended reality device, comprising: acquiring an image of an external user by controlling a camera; identifying, within the acquired image, an area representing a counterpart extended reality device; removing, from the image, the identified area representing the counterpart extended reality device; receiving gaze information of both eyes of the external user from the counterpart extended reality device; generating first modeling data by synthesizing an eye image corresponding to the gaze information of both eyes of the external user with an area from which the area representing the counterpart extended reality device has been removed, from among the entire area of the image; and outputting the first modeling data to a display.

## Description

### Technical Field

The present disclosure relates to an extended reality device that virtually displays a virtual image on a real world object, and more particularly, to an extended reality device for increasing the usefulness of face-to-face interaction between users, and to an operating method thereof.

### Background Art

Extended reality is a technology that overlays a virtual image on a real world object or a physical environment space in the real world and shows the overlaid virtual image together.

The extended reality device, while worn by a user, generally enables the user to view a scene through a see-through display positioned close to the user's eyes. Here, the scene includes one or more real world objects in the physical environment or space that the user sees directly through their eyes. The extended reality device delivers the virtual image to the user's eyes through the see-through display, and the user may simultaneously view the real world object and the virtual image through the see-through display.

However, when both of the user and the other party with whom the user wishes to interact are wearing the extended reality device, the user and the other party may interact with each other while their eyes and face are covered by the extended reality device, thereby degrading the usefulness of the interaction.

### Disclosure of Invention

### Solution to Problem

An extended reality device according to an embodiment of the present disclosure may include at least one display, at least one camera, a communication interface configured to perform data communication with a counterpart extended reality device, a memory storing at least one instruction, and at least one processor configured to execute the at least one instruction stored in the memory. The at least one processor may be further configured to execute the at least one instruction to obtain an image of an external user wearing the counterpart extended reality device by controlling the at least one camera to capture an image of the external user. The at least one processor may be further configured to execute the at least one instruction to identify, within the obtained image, an area representing the counterpart extended reality device. The at least one processor may be further configured to execute the at least one instruction to remove the area representing the identified counterpart extended reality device from the image. The at least one processor may be further configured to execute the at least one instruction to receive gaze information of both eyes of the external user from the counterpart extended reality device by controlling the communication interface. The at least one processor may be further configured to execute the at least one instruction to generate first modeling data by synthesizing an eye image corresponding to the gaze information of both eyes of the external user in an area obtained by removing the area representing the counterpart extended reality device from the entire area of the image. The at least one processor may be further configured to execute the at least one instruction to output the first modeling data to the at least one display.

An extended reality device according to an embodiment of the present disclosure may include at least one eye tracking sensor, a communication interface configured to perform data communication with a counterpart extended reality device, a memory storing at least one instruction, and at least one processor configured to execute the at least one instruction stored in the memory. The at least one processor may be further configured to execute the at least one instruction to obtain gaze information of both eyes of the user by controlling the at least one eye tracking sensor. The at least one processor may be further configured to execute the at least one instruction to transmit gaze information of both eyes of the user to the counterpart extended reality device by controlling the communication interface.

An operating method of an extended reality device, according to an embodiment of the present disclosure, may include obtaining an image of an external user wearing a counterpart extended reality device by photographing the external user through at least one camera. The operating method of the extended reality device, according to an embodiment of the present disclosure, may include identifying, within the obtained image, an area representing the counterpart extended reality device. The operating method of the extended reality device, according to an embodiment of the present disclosure, may include removing the area representing the identified counterpart extended reality device from the image. The operating method of the extended reality device, according to an embodiment of the present disclosure, may include receiving gaze information of both eyes of the external user from the counterpart extended reality device through a communication interface. The operating method of the extended reality device, according to an embodiment of the present disclosure, may include generating first modeling data by synthesizing an eye image corresponding to the gaze information of both eyes of the external user in an area obtained by removing the area representing the counterpart extended reality device from the entire area of the image. The operating method of the extended reality device, according to an embodiment of the present disclosure, may include outputting the first modeling data to the at least one display. An operating method of an extended reality device according to an embodiment of the present disclosure may include obtaining gaze information of both eyes of a user through at least one eye tracking sensor. The operating method of the extended reality device, according to an embodiment of the present disclosure, may include transmitting gaze information of both eyes of the user to a counterpart extended reality device through a communication interface.

### Brief Description of Drawings

FIG. 1 is a diagram illustrating an example in which a user wearing an extended reality device according to an embodiment of the present disclosure interacts with an external user wearing a counterpart extended reality device.
FIG. 2 is a block diagram illustrating components of an extended reality device according to an embodiment of the present disclosure.
FIG. 3 is a diagram illustrating components of an extended reality device according to an embodiment of the present disclosure.
FIG. 4 is a diagram for describing a method, performed by an extended reality device, of generating modeling data, according to an embodiment of the present disclosure.
FIG. 5 is a diagram illustrating an eye tracking sensor that is a component of an extended reality device according to an embodiment of the present disclosure.
FIG. 6 is a diagram illustrating an eye tracking sensor that is a component of an extended reality device according to an embodiment of the present disclosure.
FIG. 7 is a diagram illustrating a three-dimensional (3D) eyeball model corresponding to a user's gaze.
FIG. 8 is a block diagram illustrating components of an extended reality device according to an embodiment of the present disclosure.
FIG. 9 is a diagram for describing a method, performed by an extended reality device, of outputting modeling data, according to an embodiment of the present disclosure.
FIG. 10 is a flowchart illustrating an operating method of an extended reality device, according to an embodiment of the present disclosure.
FIG. 11 is a flowchart illustrating an operating method of an extended reality device, according to an embodiment of the present disclosure.
FIG. 12 is a flowchart illustrating an operating method of an extended reality device, according to an embodiment of the present disclosure.
FIG. 13 is a flowchart illustrating an operating method of an extended reality device, according to an embodiment of the present disclosure.
FIG. 14 is a flowchart illustrating an operating method of an extended reality device, according to an embodiment of the present disclosure.
FIG. 15 is a flowchart illustrating an operating method of a first extended reality device and a second extended reality device, according to an embodiment of the present disclosure.

### Mode for the Invention

Terms used in the present specification will be briefly described, and the present disclosure will be described in detail.

The terms used in the present disclosure have been selected as currently widely used general terms as possible while considering the functions in the present disclosure, but this may vary depending on the intention of those skilled in the art, precedents, the emergence of new technologies, and the like. In addition, in certain cases, there are terms arbitrarily selected by the applicant, and in this case, the meaning will be described in detail in the corresponding description of the disclosure. Therefore, the terms used in the present disclosure should be defined based on the meaning of the terms and the contents throughout the present disclosure, rather than simple names of the terms.

Throughout the specification, when a part "includes" a certain component, this means that other components may be further included, rather than excluding other components, unless otherwise stated. In addition, terms such as "unit" and "module" described in the specification mean a unit for processing at least one function or operation, and may be implemented in hardware or software, or a combination of hardware and software.

In addition, the description "at least one of A, B, and C" means that it may be any one of "A", "B", "C", "A and B", "A and C", "B and C", and "A, B, and C".

Hereinafter, embodiments will be described in detail with reference to the accompanying drawings so that those skilled in the art may easily carry out the present disclosure. However, the present disclosure may be implemented in various different forms and is not limited to the embodiments described herein. In addition, in order to clearly describe the present disclosure in the drawings, parts irrelevant to the description are omitted, and similar reference numerals are assigned to similar parts throughout the specification.

In the present disclosure, "extended reality" means showing a virtual image together in a physical environment space of the real world or showing a real world object and a virtual image together.

In the present disclosure, an "extended reality device" is a device capable of representing extended reality, and may be, for example, glasses-shaped augmented reality glasses or an augmented reality helmet, as well as a head mounted display apparatus (HMD) worn on the head or the face of a user.

In an embodiment of the present disclosure, the term "user" may refer to a person who controls a system, a function, or an operation.

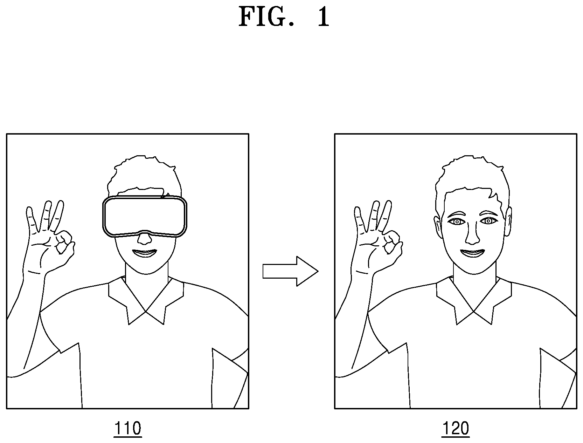

FIG. 1 is a diagram illustrating an example in which a user wearing an extended reality device according to an embodiment of the present disclosure performs a face-to-face interaction with an external user wearing a counterpart extended reality device.

When an external user with whom a user desires to interact wears an extended reality device, the user interacts with the external user while a partial area (e.g., eyes and nose) of the face is covered by the extended reality device 110.

Here, the counterpart extended reality device may refer to an extended reality device worn by the external user who interacts with the user wearing the extended reality device according to an embodiment of the present disclosure.

The external user may refer to a user wearing the counterpart extended reality device.

When the user and the external user interact with each other while a partial area of the face is covered by the extended reality device, a nonverbal communication expressed in the covered partial area of the face may not be transmitted between the user and the external user. Accordingly, when the user wearing the extended reality device and the external user wearing the counterpart extended reality device interact with each other, there is a problem in that the usefulness is deteriorated.

Therefore, in order to improve the usefulness of interaction, there is a need to display the partial area of the face covered by the extended reality device.

Hereinafter, the present disclosure describes a method or device for improving the usefulness between a user and an external user by representing an area covered by a counterpart extended reality device on the face of the external user wearing the counterpart extended reality device 120.

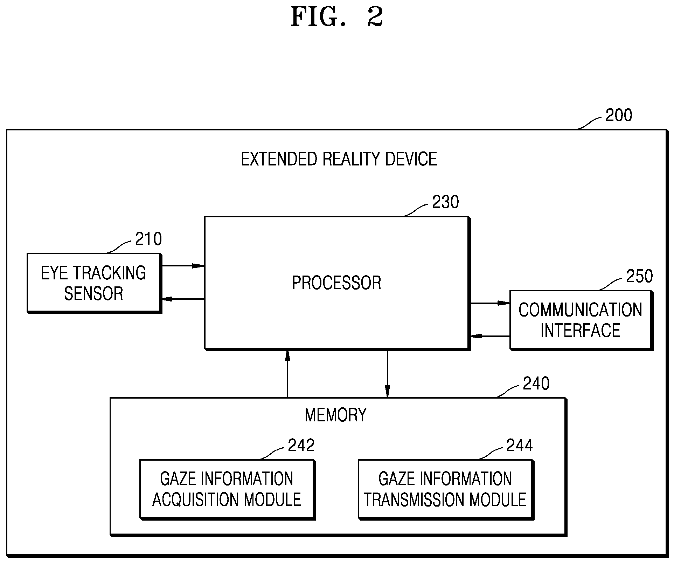

FIG. 2 is a block diagram illustrating components of an extended reality device according to an embodiment of the present disclosure.

The extended reality device 200 may include at least one eye tracking sensor 210, a communication interface 250, a memory 240 storing at least one instruction, and at least one processor 230 that executes the at least one instruction stored in the memory 240.

The memory 240 may store various data, programs, or applications for driving and controlling the extended reality device 200 according to an embodiment of the present disclosure. The memory 240 may include, for example, a non-volatile memory including at least one of a flash memory type, a hard disk type, a multimedia card micro type, a card type memory (e.g., SD or XD memory), read-only memory (ROM), electrically erasable programmable read-only memory (EEPROM), and programmable read-only memory (PROM), and a volatile memory such as random access memory (RAM) or static random access memory (SRAM).

The memory 240 may store instructions, a data structure, and a program code that are readable by the processor 230. In the following embodiments, the processor 230 may be implemented by executing the instructions or code of a program stored in the memory 240.

The programs stored in the memory 240 may be classified into a plurality of modules according to functions thereof, and may include, for example, a gaze information acquisition module 242 and a gaze information transmission module 244.

The gaze information acquisition module 242 and the gaze information transmission module 244 stored in the memory 240 refer to a unit for processing a function or operation performed by the processor 230, and may be implemented as software such as instructions, algorithms, data structures, or program code.

However, the instructions or code of the program stored in the memory 240 are not limited thereto. For example, the stored gaze information acquisition module 242 and gaze information transmission module 244 are components for an embodiment, and the components of the modules included in the memory 240 may be integrated, added, or omitted according to the specifications of the extended reality device 200 actually implemented. That is, two or more modules may be integrated into one module, or one module may be divided into two or more modules as needed.

The communication interface 250 may communicate with an external device or a server through at least one wired or wireless communication network by the processor. The communication interface according to an embodiment may include at least one short-range communication module performing communication according to communication standards such as Bluetooth, Wi-Fi, Bluetooth low energy (BLE), near field communication (NFC)/radio-frequency identification (RFID), Wi-Fi direct, ultra-wide band (UWB), or ZIGBEE, and a long-range communication module performing communication with a server for supporting long-range communication according to a long-range communication standard. The long-range communication module may perform communication through a communication network conforming to the 3G, 4G, and/or 5G communication standards or a network for Internet communication.

The eye tracking sensor 210 is a device that tracks a gaze direction of a user's eye. The eye tracking sensor 210 may detect the gaze direction of the user by detecting an image of the iris or pupil of a human or detecting a direction or an amount of illumination light, such as near-infrared rays, reflected from the cornea. The eye tracking sensor 210 may include a left-eye tracking sensor and a right-eye tracking sensor, and may detect a gaze direction of the left eye of the user and a gaze direction of the right eye of the user, respectively. Detecting the gaze direction of the user may include obtaining gaze information related to the gaze of the user.

In an embodiment of the present disclosure, the eye tracking sensor 210 may include one or a plurality of infrared irradiators, a plurality of infrared detectors, and an eye tracking camera. However, the present disclosure is not limited thereto, and the eye tracking sensor 210 may be configured to include an infrared irradiator and an infrared detector, or to include an infrared irradiator and an eye tracking camera.

The eye tracking sensor 210 may obtain information about the eye including the size of the pupil by capturing an image of the user's eye. In an embodiment of the present disclosure, the eye tracking sensor 210 may provide the processor 230 with an image obtained by photographing the user's eye including the pupil and the iris.

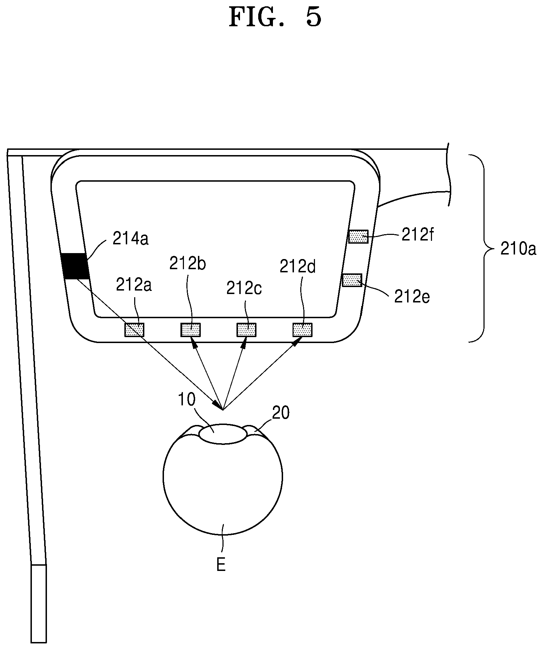

The detailed structure and operation of the eye tracking sensor 210 will be described below with reference to FIGS. 5 to 7.

The processor 230 may control the overall operation of the extended reality device. The processor 230 may operate the gaze information acquisition module 242 and the gaze information transmission module 244 by executing the one or more instructions stored in the memory 240.

The processor 230 may be configured as a hardware component that performs arithmetic, logic, and input/output operations and signal processing. The processor 230 may be configured as at least one of, for example, a central processing unit (CPU), a microprocessor, a graphics processing unit (GPU), application specific integrated circuits (ASICs), digital signal processors (DSPs), digital signal processing devices (DSPDs), programmable logic devices (PLDs), and field programmable gate arrays (FPGAs), but is not limited thereto.

FIG. 2 shows only essential components for describing the operation of the extended reality device 200, and the components included in the extended reality device 200 are not limited to those shown in FIG. 2.

The gaze information acquisition module 242 may be configured with instructions or program code related to a function and/or operation of controlling the at least one eye tracking sensor 210 to obtain gaze information of both eyes of the user.

The processor 230 according to an embodiment of the present disclosure may control the at least one eye tracking sensor 210 to obtain gaze information of both eyes of the user by executing the instructions or program code of the gaze information acquisition module 242 to control the at least one eye tracking sensor 210.

The gaze information of both eyes of the user may include at least one of a position of the user's eyeball or a gaze direction of the user, but is not limited thereto.

A specific method, performed by the processor 230 according to an embodiment of the present disclosure, of obtain, by controlling at least one eye tracking sensor, the gaze information of both eyes of the user by executing the instructions or program code stored in the memory 240 to control at least one eye tracking sensor will be described below with reference to FIGS. 5 to 7.

The gaze information transmission module 244 may be configured with instructions or program code related to a function and/or operation of controlling the communication interface 250 to transmit gaze information of both eyes of the user to the counterpart extended reality device.

The processor 230 according to an embodiment of the present disclosure may control the communication interface 250 to transmit gaze information of both eyes of the user to the counterpart extended reality device by executing the instructions or program code of the gaze information transmission module 244.

The counterpart extended reality device may refer to an extended reality device worn by an external user who interacts with a user wearing the extended reality device 200 according to an embodiment of the present disclosure.

The external user may refer to a user wearing the counterpart extended reality device.

The processor 230 according to an embodiment of the present disclosure may obtain a facial image of the user not wearing the extended reality device 200 according to an embodiment of the present disclosure by executing the instructions or program code stored in the memory 240.

The user may capture an image of the user's own face through a camera in an electronic device of the user connected in a wired or wireless manner to the extended reality device 200 according to an embodiment of the present disclosure.

Here, the electronic device of the user wirelessly connected to the extended reality device 200 according to an embodiment may refer to the electronic device of the user connected to the extended reality device 200 according to an embodiment of the present disclosure based on at least one of Bluetooth or Wi-Fi direct, but is not limited thereto.

The processor 230 according to an embodiment of the present disclosure may control the communication interface 250 to obtain a user's facial image when the user transmits the user's facial image from the user's electronic device wirelessly connected to the extended reality device 200 according to an embodiment of the present disclosure.

The electronic device of the user refers to an electronic device that supports wired or wireless connection with the extended reality device 200 according to an embodiment of the present disclosure.

The electronic device of the user may include, for example, at least one of a cell phone, a digital camera, or a tablet personal computer (PC) supporting a wired or wireless connection, but is not limited thereto.

The user may store the user's own facial image captured through the user's electronic device in the memory 240.

The user may store a virtual image in the memory 240. The virtual image may refer to an image including a human face. The virtual image may include, for example, at least one of a computer graphic image including a human face or an avatar including a human face, but is not limited thereto. The human face may include all of eyes, a nose, a mouth, ears, and the like included in the human face.

The user may store a customized virtual image in the memory 240 based on the user's setting.

The extended reality device according to an embodiment of the present disclosure may further include a camera.

The camera is configured to obtain an image by photographing a real world around the extended reality device 200. The camera may obtain an image frame such as a still image or a video through an image sensor when an application requiring an image capturing function is executed.

The camera may include, for example, at least one of an RGB camera, a depth camera, or a time of flight (TOF) camera, but is not limited thereto.

The extended reality device 200 according to an embodiment of the present disclosure may obtain a field of view (FOV) based on at least one of a still image or an image frame obtained from at least one camera.

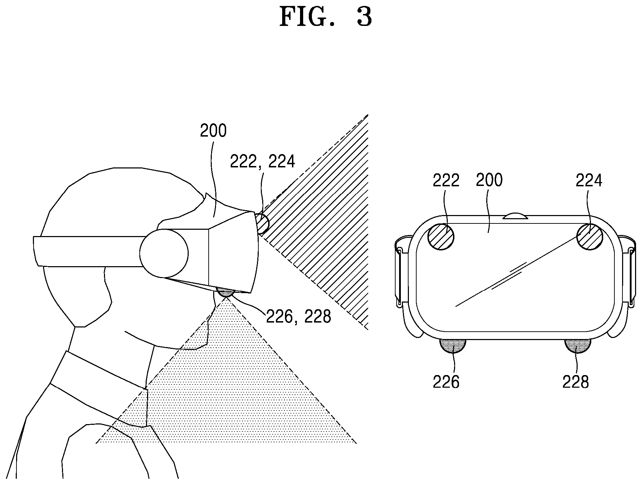

A structure of a camera according to an embodiment of the present disclosure will be described with reference to FIG. 3.

FIG. 3 is a diagram illustrating components of an extended reality device according to an embodiment of the present disclosure.

Referring to FIG. 3,
the extended reality device 200 according to an embodiment of the present disclosure may further include a camera 220.

The camera 220 included in the extended reality device 200 according to an embodiment of the present disclosure may include at least one of one or more front cameras 222 and 224 or one or more downward cameras 226 and 228.

The front cameras 222 and 224 may refer to cameras that capture an image of an object located in front of the extended reality device 200 according to an embodiment with respect to the extended reality device 200 according to an embodiment of the present disclosure.

The downward cameras 226 and 228 may be disposed in a downward direction so as to capture an image of an object located downward with respect to the extended reality device 200 according to an embodiment of the present disclosure. In an embodiment of the present disclosure, the downward cameras 226 and 228 may capture an image of an object located downward with respect to the extended reality device including the user's mouth.

The processor 230 according to an embodiment of the present disclosure may control the at least one camera 220 facing the user's face to obtain the user's facial image by executing the instructions or program code stored in the memory 240.

The processor 230 according to an embodiment of the present disclosure may control at least one camera to obtain the facial expression data of the user by executing the instructions or program code stored in the memory 240.

The facial expression data of the user may refer to a change in a facial structure according to a change in the facial expression of the user. The change in the facial structure may include at least one of, for example, a change in the height of the mouth corners or the eyebrow position when the user makes a smiling expression, or a change in the height of the mouth corners when the user makes a crying expression, but is not limited thereto.

Referring to FIG. 3, the extended reality device 200 according to an embodiment of the present disclosure may include at least one of the downward cameras 226 or 228 facing downward so as to capture an image of an object located downward with respect to the extended reality device 200 according to an embodiment of the present disclosure.

The processor 230 according to an embodiment of the present disclosure may obtain facial expression data of the user expressed below the extended reality device 200 according to an embodiment of the present disclosure through the at least one downward camera 226 or 228 by executing the instructions or program code stored in the memory 240.

For example, the facial expression data of the user may include a change in the mouth size when the user laughs with a mouth open, and a change in the height of the mouth corners when the user cries, but is not limited thereto.

For example, when the user speaks, the facial expression data of the user may include at least one change in the mouth size, but is not limited thereto.

The processor 230 according to an embodiment of the present disclosure may control the at least one camera 220 to obtain facial expression data of the user by executing the instructions or program code stored in the memory 240.

The processor 230 according to an embodiment of the present disclosure may obtain facial expression data of the user through the at least one camera 220 included in the extended reality device 200 according to an embodiment of the present disclosure, which faces the user's face by executing the instructions or program code stored in the memory 240.

For example, when the user laughs, at least one of a position of an eyebrow, a size of an eye, a change in wrinkles around the eyes, or a movement between eyebrows may be obtained. However, the present disclosure is not limited thereto.

For example, when the user is crying, at least one of a position of eyebrow, a size of an eye, a change in wrinkles around the eyes, or a movement between eyebrows may be obtained. However, the present disclosure is not limited thereto.

The processor 230 according to an embodiment of the present disclosure may store, in the memory 240, data on a change in a facial structure according to a change in the facial expression of the user occurring when the user wears the extended reality device 200 according to an embodiment of the present disclosure by executing the instructions or program code stored in the memory 240.

The processor 230 according to an embodiment of the present disclosure may output a guide message that allows the user to make various facial expressions by executing the instructions or program code stored in the memory 240.

In an embodiment of the present disclosure, the extended reality device 200 may further include a display (not shown), and the processor 230 may output the guide message that allows the user to make various facial expressions through the display by executing the instructions or program code stored in the memory 240, but is not limited thereto.

In an embodiment of the present disclosure, the extended reality device 200 may further include a speaker (not shown), and the processor 230 may output the guide message that allows the user to make various facial expressions, as a voice message, through the speaker by executing the instructions or program code stored in the memory 240. However, the present disclosure is not limited thereto.

When the user makes a facial expression according to the output guide message, the processor 230 according to an embodiment of the present disclosure may store, in the memory 240, facial expression data according to the user's facial expression corresponding to the guide message by executing the instructions or program code stored in the memory 240.

For example, when the processor 230 outputs "Smile" (guide message) to the display by executing the instructions or program code stored in the memory 240, the user may make a smiling face. The processor 230 according to an embodiment of the present disclosure may store, in the memory 240, facial expression data related to the smiling facial expression of the user by executing the instructions or program code stored in the memory 240.

The processor 230 according to an embodiment of the present disclosure may obtain facial expression data of the user through a microphone (not shown) by executing the instructions or program code stored in the memory 240.

The processor 230 according to an embodiment of the present disclosure may receive, through the microphone, a user's speech input by executing the instructions or program code stored in the memory 240.

The processor 230 according to an embodiment of the present disclosure may convert the received speech input of the user into text by executing the instructions or program code stored in the memory 240.

The processor 230 according to an embodiment of the present disclosure may convert the received speech input of the user into text based on an artificial intelligence model by executing the instructions or program code stored in the memory 240.

Artificial intelligence technology (hereinafter, referred to as "AI technology") is a technology that performs an operation through a neural network to perform processing, such as analysis and/or classification, of input data, thereby obtaining a desired result.

Such AI technology may be implemented using an algorithm. Here, an algorithm or a set of algorithms for implementing the AI technology is referred to as a neural network. Here, the neural network may receive input data, perform an operation for the above-described analysis and/or classification, and output result data. As such, in order for the neural network to accurately output the result data corresponding to the input data, it is necessary to train the neural network. Here, "training" may refer to training a neural network by inputting various data into the neural network such that the neural network may discover or learn by itself a method of analyzing the input data, a method of classifying the input data, and/or a method of extracting features necessary for generating result data from the input data, and the like. Specifically, through the training process, the neural network may be trained using training data (e.g., a plurality of different images) to optimize and set weight values inside the neural network. In addition, by learning the input data by itself through a neural network having optimized weight values, a desired result is output.

Specifically, the neural network may be classified as a deep neural network when the number of hidden layers, which are internal layers performing an operation, is plural, that is, when the depth of the neural network performing the operation increases. Examples of the neural network include a convolutional neural network (CNN), a deep neural network (DNN), a recurrent neural network (RNN), a restricted Boltzmann machine (RBM), a deep belief network (DBN), a bidirectional recurrent deep neural network (BRDNN), deep Q-networks, and the like, but are not limited thereto. In addition, the neural network may be subdivided. For example, the CNN neural network may be subdivided into a deep convolution neural network (DCNN) or a Capsnet neural network.

In the disclosed embodiment, an "AI model" may refer to a neural network including at least one layer that operates to receive input data and output a desired result. In addition, the "AI model" may refer to an algorithm or a set of a plurality of algorithms that performs an operation through a neural network to output a desired result, a processor for executing the algorithm or the set thereof, software for executing the algorithm or the set thereof, or hardware for executing the algorithm or the set thereof.

The neural network may be trained by receiving training data. In addition, the trained neural network may receive input data through an input end, and analyze the input data and perform an operation for outputting output data, which is a desired result through an output end. The operation through the neural network may be performed by a hidden layer. The hidden layer may be formed of a plurality of layers.

The instructions or programs stored in the memory 240 according to an embodiment of the present disclosure may include an automatic speech recognition model (ASR model) that converts a speech signal into text.

In an embodiment of the present disclosure, the ASR model is a speech recognition model that recognizes a user's speech, and may refer to a model trained to convert a speech input received from a user into text and output the text.

In an embodiment of the present disclosure, the ASR model may be an AI model including an acoustic model, a pronunciation dictionary, and a language model.

In an embodiment of the present disclosure, the ASR model may be an end-to-end speech recognition model having a structure including an integrated neural network without separately including an acoustic model, a pronunciation dictionary, and a language model. By using the integrated neural network, the end-to-end ASR model may convert a speech signal into text without a process of recognizing a phoneme from the speech signal and then converting the phoneme into text.

In an embodiment of the present disclosure, the processor 230 may convert the speech input received from the user into a text by using an ASR model.

The processor 230 according to an embodiment of the present disclosure may store, in the memory 240 as a look-up table (LUT), text expressing a human facial expression by executing the instructions or program code stored in the memory 240.

For example, the processor 230 according to an embodiment of the present disclosure may label a text "happy" as (1,1) and store the text in the table, label a text "funny" as (1,2) and store the text in the table, or label a text "sad" as (2,1) and store the text in the table. However, the present disclosure is not limited thereto.

The processor 230 according to an embodiment of the present disclosure may store facial expression data corresponding to text expressing a facial expression stored in the memory 240 as a table, by executing the instructions or program code stored in the memory 240.

For example, when a text "funny" is labeled as (1,2) and stored in the table, the processor 230 according to an embodiment of the present disclosure may store, in the memory, facial expression data related to the smiling facial expression of the user obtained through at least one camera by executing the instructions or program code stored in the memory 240.

For example, when the text "sad" is labeled as (2,1) and stored in the table, the processor 230 according to an embodiment of the present disclosure may store, in the memory, facial expression data related to the sad facial expression of the user obtained through at least one camera by executing the instructions or program code stored in the memory 240. However, the present disclosure is not limited thereto.

The processor 230 according to an embodiment of the present disclosure may match the text converted from the received speech input with the table stored in the memory 240 by executing the instructions or program code stored in the memory 240.

The processor 230 according to an embodiment of the present disclosure may obtain facial expression data of the user based on the converted text and the facial expression data stored in the table by executing the instructions or program code stored in the memory 240.

For example, the processor 230 according to an embodiment of the present disclosure may label the text "happy" as (1,1) and store the text in the table, and when the text converted from the user's speech input includes the expression "happy", match the converted text with (1,1) by executing the instructions or program code stored in the memory 240. The processor 230 according to an embodiment of the present disclosure may obtain facial expression data of the user corresponding to (1,1) of the table stored in the memory 240. However, the present disclosure is not limited thereto.

The processor 230 according to an embodiment of the present disclosure may generate first modeling data including the facial expression of the user based on the obtained facial image and facial expression data of the user by executing the instructions or program code stored in the memory 240.

The processor 230 according to an embodiment of the present disclosure may generate first modeling data including the facial expression of the user based on rendering from the user's facial image and facial expression data by executing the instructions or program code stored in the memory 240.

Rendering may refer to converting a two-dimensional image into a three-dimensional image.

The processor 230 according to an embodiment of the present disclosure may store a general facial muscle model of a human in the memory 240 by executing the instructions or program code stored in the memory 240.

The processor 230 according to an embodiment of the present disclosure may map the facial image of the user not wearing the extended reality device 200 according to an embodiment of the present disclosure to the facial muscle model stored in the memory 240 by executing the instructions or program code stored in the memory 240.

The processor 230 according to an embodiment of the present disclosure may map the facial image of the user not wearing the extended reality device 200 according to an embodiment of the present disclosure to the facial muscle model stored in the memory 240 based on the AI model by executing the instructions or program code stored in the memory 240.

The processor 230 according to an embodiment of the present disclosure may map muscles that induce facial expression changes of the user in the facial image of the user not wearing the extended reality device 200 according to an embodiment of the present disclosure to the facial muscle model stored in the memory 240 by executing the instructions or program code stored in the memory 240.

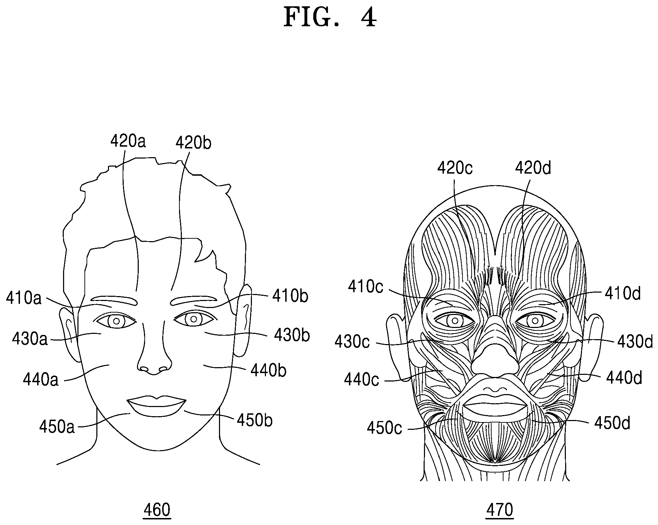

A detailed method, performed by the processor 230 according to an embodiment of the present disclosure of mapping, by executing the instructions or program code stored in the memory 240, muscles that induce a change in the facial expression of the user in the facial image of the user not wearing the extended reality device 200 according to an embodiment of the present disclosure, to the facial muscle model stored in the memory 240, will be described with reference to FIG. 4.

FIG. 4 is a diagram for describing a method, performed by the extended reality device 200, of generating modeling data, according to an embodiment of the present disclosure.

The processor 230 according to an embodiment of the present disclosure may map orbicularis oculi muscles 410a and 410b that induce the operation of closing or opening the eyes in the obtained user's facial image 460 to orbicularis oculi muscles 410c and 410d of a facial muscle model 470 by executing the instructions or program code stored in the memory 240.

The processor 230 according to an embodiment of the present disclosure may map corrugators 420a and 420b that form wrinkles of the middle of the forehead and induce a change in eyebrows in the obtained user's facial image 460 to the corrugators 420c and 420d of the facial muscle model 470 by executing the instructions or program code stored in the memory 240.

The processor 230 according to an embodiment of the present disclosure may map zygomaticus minor muscles 430a and 430b or zygomaticus major muscles 440a and 440b that induce a change in the mouth corners in the obtained user's facial image 460 to zygomaticus minor muscles 430c and 430d or the zygomaticus major muscles 440c and 440d of the facial muscle model 470, respectively by executing the instructions or program code stored in the memory 240.

The processor 230 according to an embodiment of the present disclosure may map depressor anguli oris muscles 450a and 450b that induce a change in the mouth corners in the obtained user's facial image 460 to depressor anguli oris muscles 450c and 450d of the facial muscle model 470 by executing the instructions or program code stored in the memory 240.

However, a method, performed by the processor 230 according to an embodiment of the present disclosure, of mapping, by executing the instructions or program code stored in the memory 240, a user's facial image to a facial muscle model is merely an embodiment, and the present disclosure is not limited thereto.

Referring again to FIG. 2,
The processor 230 according to an embodiment of the present disclosure may synthesize the user's facial image into the facial muscle model based on mapping muscles that induce facial expression changes of the user in the user's facial image to the facial muscle model stored in the memory 240 by executing the instructions or program code stored in the memory 240.

Synthesizing may refer to combining a user's facial image with a facial muscle model.

Synthesizing may be performed based on at least one of a method of forming layers by overlapping a plurality of images, for example, a plurality of user's facial images, and a facial muscle model, and synthesizing the layers by adjusting transparency of each of the layers, a method of segmenting the user's facial image into parts, for example, eyes, nose, or mouth, and synthesizing the segmented parts into a facial muscle model, or an AI model-based synthesizing method, but is not limited thereto.

The processor 230 according to an embodiment of the present disclosure may obtain the first modeling data based on the facial muscle model to which the facial image is mapped and the obtained facial expression data of the user by executing the instructions or program code stored in the memory 240.

The processor 230 according to an embodiment of the present disclosure may control the movement of at least one muscle included in the facial muscle model to which the muscle of the facial image inducing a change in the facial structure is mapped, when the facial structure is changed according to the change in the facial expression of the user by executing the instructions or program code stored in the memory 240.

The processor 230 according to an embodiment of the present disclosure may control the movement of at least one muscle included in the facial muscle model to which the muscles of the facial image inducing a change in the facial structure are mapped by executing the instructions or program code stored in the memory 240, thereby generating the first modeling data including the facial expression of the user.

The processor 230 according to an embodiment of the present disclosure may control the communication interface 250 to transmit the first modeling data to the counterpart extended reality device by executing the instructions or program code stored in the memory 240.

The processor 230 according to an embodiment of the present disclosure may generate second modeling data including the gaze information of both eyes of the user based on the first modeling data and the gaze information by executing the instructions or program code stored in the memory 240.

The processor 230 according to an embodiment of the present disclosure may determine the positions of the user's eyeballs from the gaze information of both eyes obtained by executing the instructions or program code stored in the memory 240.

The processor 230 according to an embodiment of the present disclosure may identify the positions of the user's eyeballs in the first modeling data based on the determined positions of the user's eyeballs by executing the instructions or program code stored in the memory 240.

The processor 230 according to an embodiment of the present disclosure may synthesize both eyes of the user including the gaze information of the user at the positions of the user's eyeballs identified in the first modeling data by executing the instructions or program code stored in the memory 240.

Synthesizing may be performed by at least one of a method of forming layers by overlapping a plurality of images, for example, a plurality of images of both eyes of the user, at the positions of the user's eyeballs identified in the first modeling data, and synthesizing the layers by adjusting the transparency of each of the layers, a method of segmenting the images of both eyes of the user into parts, for example, a pupil, an iris, or a white and synthesizing the segmented parts at the positions of the user's eyeballs identified in the first modeling data, or an AI model-based synthesizing method, but is not limited thereto.

The processor 230 according to an embodiment of the present disclosure may control the communication interface 250 to transmit the second modeling data to the counterpart extended reality device by executing the instructions or program code stored in the memory 240.

The processor 230 according to an embodiment of the present disclosure may recognize a mutual agreement on transmission and reception of at least one of the gaze information of both eyes of the user, the first modeling data, or the second modeling data with the counterpart extended reality device by executing the instructions or program code stored in the memory 240.

The counterpart extended reality device may refer to an extended reality device worn by an external user who interacts with a user wearing the extended reality device 200 according to an embodiment of the present disclosure.

The external user may refer to a user wearing the counterpart extended reality device.

The processor 230 according to an embodiment of the present disclosure may recognize, by executing the instructions or program code stored in the memory 240, the counterpart extended reality device by controlling the at least one camera facing forward.

The processor 230 according to an embodiment of the present disclosure may recognize an identifier included in the counterpart extended reality device by executing the instructions or program code stored in the memory 240.

Here, the identifier may refer to an image in the form of code including a pattern located on the front surface of the counterpart extended reality device.

The identifier may include, for example, at least one of a quick response (QR) code or an Aruco marker, but is not limited thereto.

The processor 230 according to an embodiment of the present disclosure may allocate an identifier to the counterpart extended reality device by executing the instructions or program code stored in the memory 240.

The processor 230 according to an embodiment of the present disclosure may obtain distance information between the at least one camera of the extended reality device of the present disclosure and the counterpart extended reality device through the at least one camera by executing the instructions or program code stored in the memory 240.

The processor 230 according to an embodiment of the present disclosure may allocate an identifier to the counterpart extended reality device based on the obtained distance information by executing the instructions or program code stored in the memory 240.

For example, assuming that the front of the camera 220 of the extended reality device 200 according to an embodiment of the present disclosure is 0°, when the counterpart extended reality device is located at an angle of 30° to the left and a distance of about 1 m, the identifier of "first counterpart extended reality device" may be allocated to the counterpart extended reality device located at an angle of 30° to the left and a distance of about 1 m.

The processor 230 according to an embodiment of the present disclosure may recognize a plurality of counterpart extended reality devices by executing the instructions or program code stored in the memory 240.

For example, the processor 230 according to an embodiment of the present disclosure may recognize each of the counterpart extended reality devices based on at least one of a QR code or an Aruco marker by executing the instructions or a program code stored in the memory 240.

The processor 230 according to an embodiment of the present disclosure may allocate an identifier to each of the plurality of counterpart extended reality devices by executing the instructions or program code stored in the memory 240.

The processor 230 according to an embodiment of the present disclosure may control the at least one camera 220 to obtain distance information between the at least one camera 220 and each of the counterpart extended reality devices by executing the instructions or program code stored in the memory 240.

The processor 230 according to an embodiment of the present disclosure may allocate an identifier to each of the counterpart extended reality devices based on the obtained distance information by executing the instructions or program code stored in the memory 240.

For example, assuming that the front of the camera 220 of the extended reality device 200 according to an embodiment of the present disclosure is 0° in the presence of a plurality of counterpart extended reality devices, when the first counterpart extended reality device is located at an angle of 30° to the left and a distance of about 1 m, and the second counterpart extended reality device is located at an angle of 30° to the right and a distance of about 2 m, the processor 230 according to an embodiment of the present disclosure may allocate the identifier of "counterpart extended reality device 1" to the first counterpart extended reality device located at an angle of 30° to the left and a distance of about 1 m, and the identifier of "counterpart extended reality device 2" to the second counterpart extended reality device located at an angle of 30° to the right and a distance of about 2 m, respectively, by executing the instructions or program code stored in the memory 240.

The processor 230 according to an embodiment of the present disclosure may perform a mutual agreement on transmission and reception of at least one of the gaze information of both eyes of the user, the first modeling data, or the second modeling data with the recognized at least one counterpart extended reality device by executing the instructions or program code stored in the memory 240.

The mutual agreement may mean that there is a user's consent regarding the transmission of at least one of the gaze information of both eyes of the user, the first modeling data, or the second modeling data by the extended reality device 200 according to an embodiment of the present disclosure to the counterpart extended reality device, and an external user's consent to reception of at least one of the gaze information of both eyes of the user, the first dimensional modeling data, or the second modeling data.

The mutual agreement between the extended reality device 200 according to an embodiment of the present disclosure and the counterpart extended reality device may be performed by the communication interface 250 included in the extended reality device 200 according to an embodiment of the present disclosure and the counterpart extended reality device.

The processor 230 according to an embodiment of the present disclosure may output a notification message for obtaining a user input regarding whether to transmit at least one of the gaze information of both eyes of the user, the first modeling data, or the second modeling data when the counterpart extended reality device is recognized by executing the instructions or program code stored in the memory 240.

In an embodiment of the present disclosure, the extended reality device 200 may further include a display (not shown), and the processor 230 may output, through the display, a notification message for obtaining a user input regarding whether to transmit at least one of the gaze information of both eyes of the user, the first modeling data, or the second modeling data by executing the instructions or program code stored in the memory 240.

In an embodiment of the present disclosure, the extended reality device 200 may further include a speaker (not shown), and the processor 230 may output, through the speaker, a notification message for obtaining a user input regarding whether to transmit at least one of the gaze information of both eyes of the user, the first modeling data, or the second modeling data, as a voice message by executing the instructions or program code stored in the memory 240. However, the present disclosure is not limited thereto.

The processor 230 according to an embodiment of the present disclosure may obtain a user input regarding the output notification message by executing the instructions or program code stored in the memory 240.

The user input may include, for example, at least one of a gaze direction of the user, a voice of the user, or a hand motion of the user, but is not limited thereto.

The processor 230 according to an embodiment of the present disclosure may obtain, through the communication interface 250, information related to whether the external user wearing the counterpart extended reality device agrees to receive at least one of the gaze information of both eyes of the user, the first modeling data, or the second modeling data by executing the instructions or program code stored in the memory 240.

Accordingly, the processor 230 according to an embodiment of the present disclosure may recognize a mutual agreement on the transmission and reception of at least one of the gaze information of both eyes of the user, the first modeling data, or the second modeling data with the counterpart extended reality device through the communication interface.

In response to the mutual agreement on the transmission and reception of at least one of the gaze information of both eyes of the user, the first modeling data, or the second modeling data with the counterpart extended reality device being recognized, the processor 230 according to an embodiment of the present disclosure may transmit, through the communication interface, at least one of the gaze information of both eyes of the user, the first modeling data, or the second modeling data to the counterpart extended reality device by executing the instructions or program code stored in the memory 240.

When the processor 230 according to an embodiment of the present disclosure transmits the first modeling data to the counterpart extended reality device by executing the instructions or program code stored in the memory 240, the processor 230 may transmit the user's gaze information obtained through at least one eye tracking sensor to the counterpart extended reality device.

Accordingly, it is possible to efficiently use limited resources in data transmission and reception between the extended reality device according to an embodiment of the present disclosure and the counterpart extended reality device.

FIG. 5 is a diagram illustrating an eye tracking sensor that is a component of an extended reality device according to an embodiment of the present disclosure.

The eye tracking sensor 210a may include an infrared irradiator 214a and a plurality of infrared detectors 212a to 212f. Although six infrared detectors 212a to 212f are shown in FIG. 5, this is for convenience of description, and the number of the infrared detectors 212a to 212f is not limited thereto.

The infrared irradiator 214a may irradiate infrared light to the cornea where the crystalline lens of the eye E is located, and the plurality of infrared detectors 212a to 212f may detect infrared light reflected from the cornea. In an embodiment of the present disclosure, the eye tracking sensor 210a may obtain information about the amount of infrared light detected by each of the infrared detectors 212a to 212f, and obtain information about the gaze direction of the user's eye E based on the obtained amount of infrared light. The eye tracking sensor 210a may provide the obtained information about the gaze direction to the processor 230 (see FIG. 2). For example, the information about the gaze direction obtained by the eye tracking sensor 210a may be gaze angle information in horizontal and vertical directions of the left eye and gaze angle information in horizontal and vertical directions of the right eye.

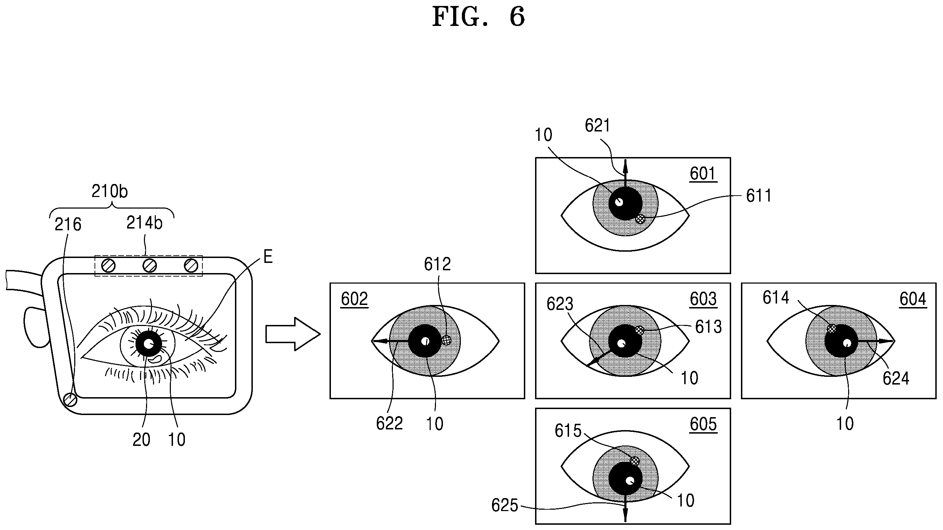

Although the eye tracking sensor 210a of the present embodiment is described as an example of an IR scanner method using infrared illumination light, the present disclosure is not limited thereto. As another example, the eye tracking sensor 210a may include an image sensor that captures an image of a human eye, the pupil 10, or the iris 20. The eye tracking sensor 210b including the image sensor will be described in detail with reference to FIG. 6.

FIG. 6 is a diagram illustrating an eye tracking sensor that is a component of an extended reality device according to an embodiment of the present disclosure.

Referring to FIG. 6, the eye tracking sensor 210b may track the user's gaze based on the positions of the reflected lights 611, 612, 613, 614, and 615 reflected from an eye E of the user and obtain information about the gaze direction through the tracking. The eye tracking sensor 210b may include a light source 214b and a camera 216.

The light source 214b may include an infrared light-emitting diode (IR LED). In the embodiment illustrated in FIG. 6, the light source 214b may include a plurality of light-emitting diodes disposed at different positions. The light source 214b may provide light (e.g., infrared light) to the eye E when an image of the eye E of the user is captured. As light is provided to the user's eye E, reflected light reflected from the user's eye E may be generated.

The camera 216 may be configured as at least one camera. The camera 216 may be implemented as an infrared camera (IR). The extended reality device may track the gaze of the user's eye E using the images 601 to 605 of the user's eye E captured by the camera 216. For example, the eye tracking sensor 210b may track the user's gaze by detecting the pupil 10 and the reflected lights 611 to 615 in the eye images 601 to 605 of the user, thereby obtaining a gaze vector through the tracking. The eye tracking sensor 210b may detect the positions of the pupil 10 and the reflected lights 611 to 615 in the eye images 601 to 605 of the user, and determine the gaze direction of the user's eye E based on a relationship between the position of the pupil 10 and the positions of the reflected lights 611 to 615.

For example, the eye tracking sensor 210b may detect the pupil 10 and the reflected light 611 in the captured first eye image 601, and determine a gaze direction 621 of the user's eye based on a relationship between a position of the pupil 10 and a position of the reflected light 611. In the same manner, the pupil 10 and the reflected lights 612, 613, 614, and 615 may be detected from the second to fifth eye images 602, 603, 604, and 605, respectively, and the gaze directions 622, 623, 624, and 625 of the user's eyes may be determined based on a relationship between the position of the pupil 10 and the positions of the reflected lights 612, 613, 614, and 615.

In an embodiment of the present disclosure, the eye tracking sensor 210b may obtain a gaze vector based on information about the determined gaze direction. The eye tracking sensor 210b may provide data about a vector value and a direction of the obtained gaze vector to the processor 230 (see FIG. 2).

In another embodiment, the eye tracking sensor 210b may provide only coordinate values for the position of the pupil 10 and the positions of the reflected lights 611 to 615 detected in the eye images 601 to 605 to the processor 230 (see FIG. 2), and the processor 230 may calculate the gaze vector of the user's eye E based on the coordinate values obtained from the eye tracking sensor 210b.

In an embodiment of the present disclosure, the eye tracking sensor 210b may provide the eye images 601 to 605 to the processor 920. The processor 920 may detect regions corresponding to the pupil 10 and the iris 20 from the eye images 601 to 605.

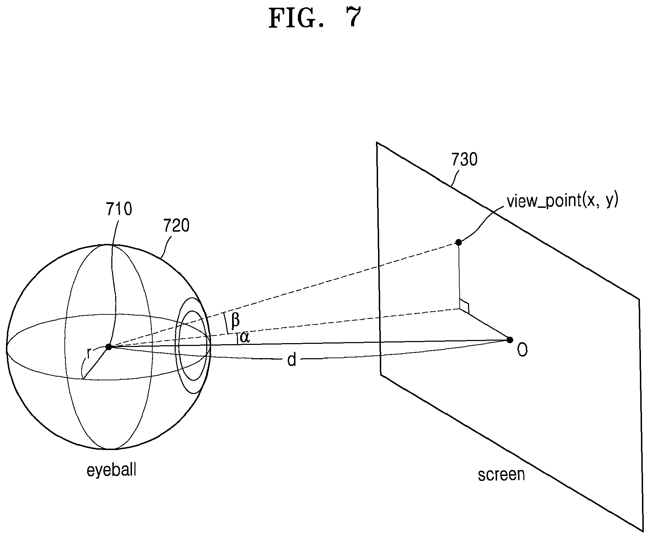

FIG. 7 is a diagram illustrating a three-dimensional (3D) eyeball model corresponding to a use's gaze.

The eyeball model may be modeled by assuming that an eyeball 720 of a human has a spherical shape and the eyeball ideally rotates according to a gaze direction. In addition, the eyeball model may be expressed mathematically as shown in Equations 1 and 2 below.$\begin{matrix}x = d ⋅ tanα \\ y = d ⋅ secα ⋅ tanβ\end{matrix}$$\begin{matrix}β = {sin}^{- 1} \left(diff_y/r\right) \\ α = {sin}^{- 1} \left(diff_x/rcosβ\right)\end{matrix}$

In Equation 1, d represents a distance between the center 710 of the user's eye and a virtual screen 730, *α* is an angle at which the user's eye rotates in the x-axis direction based on the case in which the user's eye gazes at the virtual screen 730 in front, and *β* is an angle at which the user's eye rotates in the y-axis direction based on the case in which the user's eye gazes at the virtual screen 730 in front. Also, in Equation 2, r denotes a radius of a sphere when the user's eye is assumed to be the sphere.

The eye tracking sensor 210 according to an embodiment of the present disclosure may measure the degree of rotation (e.g., and α and β) of the user's eye (e.g., the left eye) by using the method described with reference to FIGS. 5 to 7, and the extended reality device 200 may calculate a two-dimensional coordinate of the gaze direction of the user's eye on the virtual screen by using the degree of rotation (e.g., α and β) of the user's eye.

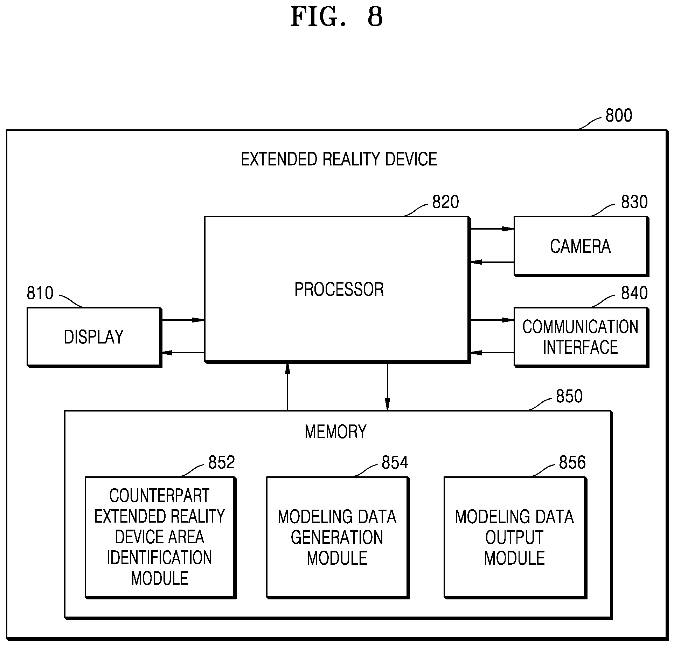

FIG. 8 is a block diagram illustrating components of an extended reality device according to an embodiment of the present disclosure.

The extended reality device 800 may include at least one display 810, at least one camera 830, a communication interface 840, a memory 850 storing at least one instruction, and at least one processor 820 executing the at least one instruction stored in the memory 850.

The display 810 may be configured as a physical device including at least one of a liquid crystal display, a thin film transistor-liquid crystal display, an organic light-emitting diode (OLED), a flexible display, a 3D display, and an electrophoretic display, but is not limited thereto.

The memory 850 may store various data, programs, or applications for driving and controlling the extended reality device according to an embodiment of the present disclosure. The memory 240 may include, for example, a non-volatile memory including at least one of a flash memory type, a hard disk type, a multimedia card micro type, a card type memory (e.g., an SD or XD memory), ROM, EEPROM, and PROM, and a volatile memory such as RAM or SRAM.

The memory 850 may store instructions, a data structure, and a program code that are readable by the processor 820. In the following embodiments, the processor 820 may be implemented by executing the instructions or code of a program stored in the memory 850.

The programs stored in the memory 850 may be classified into a plurality of modules according to functions thereof, and may include, for example, a counterpart extended reality device area identification module 852, a modeling data generation module 854, and a modeling data output module 856.

The counterpart extended reality device area identification module 852, the modeling data generation module 854, and the modeling data output module 856 stored in the memory 850 refer to units for processing functions or operations performed by the processor 820, and may be implemented as software such as instructions, algorithms, data structures, or program code.

However, the instructions or code of the program stored in the memory 850 are not limited thereto. For example, the stored counterpart extended reality device area identification module 852, the modeling data generation module 854, and the modeling data output module 856 are configurations for an embodiment, and the configurations of the modules included in the memory 250 may be integrated, added, or omitted according to the specifications of the extended reality device 800 actually implemented. That is, two or more modules may be integrated into one module, or one module may be divided into two or more modules as needed.

The camera 830 is configured to obtain an image by photographing a real world around the extended reality device 800. The camera 830 may obtain an image frame such as a still image or a video through an image sensor when an application requiring an image capturing function is executed. The camera 830 may include, for example, at least one of an RGB camera, a depth camera, or a TOF camera, but is not limited thereto.

The extended reality device 800 according to an embodiment of the present disclosure may obtain an FOV based on at least one of a still image or an image frame obtained from the at least one camera 830.

The processor 820 may control the overall operation of the extended reality device. The processor 820 may execute the one or more instructions stored in the memory 850 to operate the counterpart extended reality device area identification module 852, the modeling data generation module 854, and the modeling data output module 856.

The processor 820 may be configured as a hardware component that performs arithmetic, logic, and input/output operations and signal processing. The processor 820 may be configured as at least one of, for example, a CPU, a microprocessor, a GPU, ASICs, DSPs, DSPDs, PLDs, and FPGAs, but is not limited thereto.

FIG. 8 illustrates only essential components for describing the operation of the extended reality device 800, and the components included in the extended reality device 800 are not limited to those illustrated in FIG. 8.

The counterpart extended reality device area identification module 852 may be configured with instructions or program code related to a function and/or operation of obtaining an image of an external user wearing the counterpart extended reality device by controlling at least one camera, and obtaining location information on an area where an image representing the counterpart extended reality device is located, in the image of the external user.

The processor 820 according to an embodiment of the present disclosure may control the at least one camera 830 to obtain an image of an external user wearing the counterpart extended reality device by executing the instructions or program code of the counterpart extended reality device area identification module 852.

The processor 820 according to an embodiment of the present disclosure may control the at least one camera 830 to photograph the external user wearing the counterpart extended reality device, thereby obtaining an image of the external user, by executing the instructions or program code of the counterpart extended reality device area identification module 852.

The counterpart extended reality device may refer to an extended reality device worn by an external user who interacts with a user wearing the extended reality device 800 according to an embodiment of the present disclosure.

The external user may refer to a user wearing the counterpart extended reality device.

The processor 820 according to an embodiment of the present disclosure may identify an area representing the counterpart extended reality device in the image of the external user by executing the instructions or program code of the counterpart extended reality device area identification module 852.

The processor 820 according to an embodiment of the present disclosure may obtain device information corresponding to the counterpart extended reality device from device information pre-stored in the memory 850 by executing the instructions or program code of the counterpart extended reality device area identification module 852.

The processor 820 according to an embodiment of the present disclosure may obtain, from the device information stored in the memory 850, device information corresponding to the counterpart extended reality device included in the obtained image of the external user by controlling at least one camera, by executing the instructions or program code of the counterpart extended reality device area identification module 852.

The device information stored in the memory 850 may be changed by the user.

The device information may refer to at least one of model information of the extended reality device, size information of the extended reality device, external shape information of the extended reality device, or color information of the extended reality device. However, the present disclosure is not limited thereto.

The processor 820 according to an embodiment of the present disclosure may obtain at least one of model information, size information, external shape information, or color information of the counterpart extended reality device based on the obtained device information corresponding to the counterpart extended reality device, by executing the instructions or program code of the counterpart extended reality device area identification module 852. However, the present disclosure is not limited thereto.

The processor 820 according to an embodiment of the present disclosure may identify an area indicated by the counterpart extended reality device in the image of the external user based on the obtained device information corresponding to the counterpart extended reality device by executing the instructions or program code of the counterpart extended reality device area identification module 852.

The processor 820 according to an embodiment of the present disclosure may obtain location information about an area where the image representing the counterpart extended reality device is located in an image of an external user by executing the instructions or program code of the counterpart extended reality device area identification module 852.

The location information may include location information where the counterpart extended reality device is located on the face of an external user wearing the counterpart extended reality device.

The processor 820 according to an embodiment of the present disclosure may control the at least one camera 830 to detect the external shape of the counterpart extended reality device by executing the instructions or program code of the counterpart extended reality device area identification module 852.

The external shape of the counterpart extended reality device may refer to an edge of the counterpart extended reality device.

For example, the processor 820 according to an embodiment of the present disclosure may detect the external shape of the counterpart extended reality device based on the difference between the face color of the external user and the color of the counterpart extended reality device through at least one camera by executing the instructions or program code of the counterpart extended reality device area identification module 852.

For example, the processor 820 according to an embodiment of the present disclosure may detect the external shape of the counterpart extended reality device based on segmentation by executing the instructions or program code of the counterpart extended reality device area identification module 852. Segmentation may refer to clustering pixels of an image into a predetermined number of groups. However, the above-described example is merely an embodiment and the present disclosure is not limited thereto.

The processor 820 according to an embodiment of the present disclosure may obtain location information about the area where an image representing the counterpart extended reality device is located, in an image of an external user, based on the detected external shape of the counterpart extended reality device by executing the instructions or program code of the counterpart extended reality device area identification module 852.

The modeling data generation module 854 is configured with instructions or program code related to a function and/or operation of removing the area representing the identified counterpart extended reality device from the obtained image of the external user.

The processor 820 according to an embodiment of the present disclosure may remove the area representing the identified counterpart extended reality device from the obtained image of the external user by executing the instructions or program code of the modeling data generation module 854.

The processor 820 according to an embodiment of the present disclosure may remove an image area representing the counterpart extended reality device from the image of the external user based on the location information about the area where the image representing the counterpart extended reality device is located, by executing the instructions or program code of the modeling data generation module 854.

The processor 820 according to an embodiment of the present disclosure may detect the external shape of the counterpart extended reality device through at least one camera by executing the instructions or program code of the modeling data generation module 854.

Here, the external shape of the counterpart extended reality device may refer to an edge of the counterpart extended reality device.

The processor 820 according to an embodiment of the present disclosure may remove the image area representing the counterpart extended reality device from the image of the external user based on the detected external shape of the counterpart extended reality device by executing the instructions or program code of the modeling data generation module 854.

The modeling data generation module 854 may be configured with instructions or program code related to a function and/or operation of controlling the communication interface 840 to receive gaze information of both eyes of an external user from the counterpart extended reality device.

The processor 820 according to an embodiment of the present disclosure may control the communication interface 840 to receive gaze information of both eyes of the external user from the counterpart extended reality device by executing the instructions or program code of the modeling data generation module 854.

The modeling data generation module 854 may further include instructions or program code related to a function and/or operation of generating the first modeling data by synthesizing an eye image corresponding to the gaze information of both eyes of the external user in an area obtained by removing the area representing the counterpart extended reality device from the entire area of the obtained image.

The processor 820 according to an embodiment of the present disclosure may generate the first modeling data by synthesizing the eye image corresponding to the gaze information of both eyes of the external user in the area obtained by removing the area representing the counterpart extended reality device from the entire area of the obtained image by executing the instructions or program code of the modeling data generation module 854.

The gaze information may include at least one of a position of the user's eyeball or a gaze direction of the user, but is not limited thereto.

Synthesizing may be performed based on at least one of a method of forming layers by overlapping eye images corresponding to the gaze information of both eyes of the external user in an area obtained by removing the area representing the counterpart extended reality device from the entire area of the obtained image or an AI model-based synthesizing method, but is not limited thereto.

The modeling data output module 856 may further include instructions or program code related to a function and/or an operation of outputting the generated first modeling data to the at least one display 810.

The processor 820 according to an embodiment of the present disclosure may output the first modeling data to the at least one display 810 by executing the instructions or program code of the modeling data output module 856.

The processor 820 according to an embodiment of the present disclosure may render both eyes of the eye image in a direction corresponding to the gaze direction of the external user obtained from the gaze information of both eyes of the external user by executing the instructions or program code stored in the memory 850.

Rendering may refer to converting a two-dimensional image into a three-dimensional image.

The processor 820 according to an embodiment of the present disclosure may receive the second modeling data from the counterpart extended reality device by executing the instructions or program code stored in the memory 850.

Here, the second modeling data may refer to modeling data including the facial expression of the external user.

The processor 820 according to an embodiment of the present disclosure may receive the second modeling data from the counterpart extended reality device through the communication interface 840 by executing the instructions or program code stored in the memory 850.

The processor 820 according to an embodiment of the present disclosure may generate third modeling data by synthesizing the second modeling data in an area obtained by removing the area representing the counterpart extended reality device from the entire area of the obtained image of the external user by executing the instructions or program code stored in the memory 850.

Synthesizing may refer to combining the second modeling data with the image area from which the counterpart extended reality device is removed.

Synthesizing may be performed by at least one of a method of forming layers by overlapping a plurality of images, for example, a plurality of second modeling data, and an area from which the counterpart extended reality device is removed, and adjusting transparency of each layer, a method of segmenting facial image the user's facial image included in the second modeling data into parts, for example, eyes, nose, or mouth, and synthesizing the segmented parts at a position from which the counterpart extended reality device is removed, or an AI model-based synthesizing method, but is not limited thereto.

The processor 820 according to an embodiment of the present disclosure may generate third modeling data in which the counterpart extended reality device is replaced with the second modeling information in the image of the external user, based on the obtained location information and the second modeling data by executing the instructions or program code stored in the memory 850.

The modeling data output module 856 may further include instructions or program code related to a function and/or an operation of outputting the third modeling data to the at least one display.

The processor 820 according to an embodiment of the present disclosure may output the generated third modeling data to at least one display by executing the instructions or program code of the modeling data output module 856.

The modeling data output module 856 may further include instructions or program code related to a function and/or an operation of determining an output range of the first modeling data or the third modeling data.

The processor 820 according to an embodiment of the present disclosure may determine an output range of the first modeling data or the third modeling data by executing the instructions or program code of the modeling data output module 856.

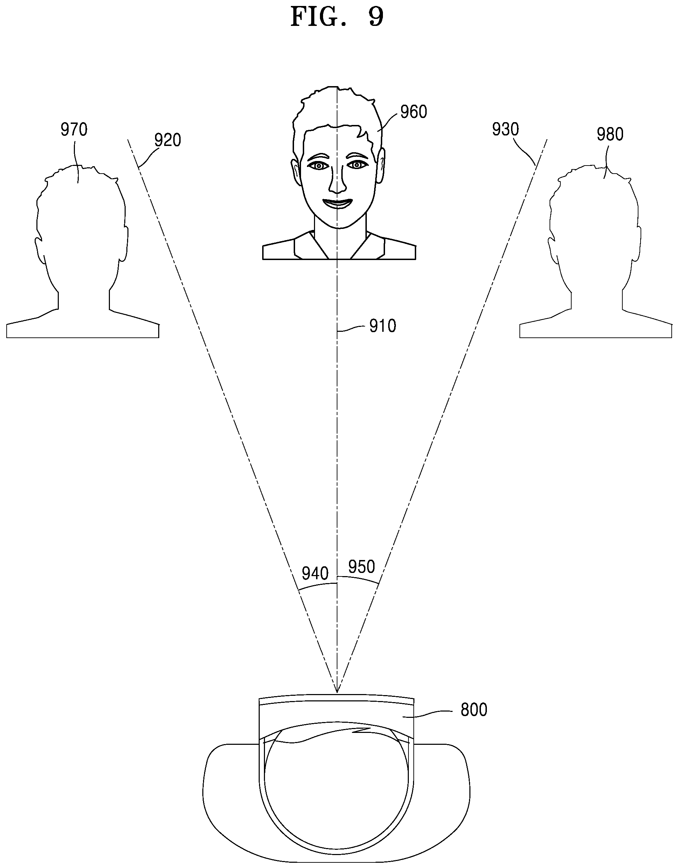

A method, performed by the processor 820 according to an embodiment of the present disclosure, of determining an output range of the first modeling data or the third modeling data by executing the instructions or program code of the modeling data output module 856 will be described with reference to FIG. 9.

FIG. 9 is a diagram for describing a method, performed by an extended reality device, of outputting modeling data, according to an embodiment of the present disclosure.

FIG. 9 is a diagram illustrating a state in which a user gazes at the front while wearing the extended reality device 800 according to an embodiment.

The processor 820 according to an embodiment of the present disclosure may obtain, through at least one eye tracking sensor (not shown), gaze information of both eyes of the user by executing the instructions or program code of the modeling data output module 856.

The gaze information may include at least one of a position of the user's eyeball or a gaze direction of the user, but is not limited thereto.

The eye tracking sensor is a device that tracks a gaze direction of a user's eye. The eye tracking sensor may detect the gaze direction of the user by detecting an image of the iris or pupil of a human or detecting a direction or an amount of light, such as illumination light such as near infrared rays, reflected from the cornea. The eye tracking sensor may include a left-eye tracking sensor and a right-eye tracking sensor, and may detect a gaze direction of the left eye of the user and a gaze direction of the right eye of the user, respectively. Detecting the gaze direction of the user may include obtaining gaze information related to the gaze of the user.

In an embodiment of the present disclosure, the eye tracking sensor may include one or a plurality of infrared irradiators, a plurality of infrared detectors, and an eye tracking camera. However, the present disclosure is not limited thereto, and the eye tracking sensor may be configured to include an infrared irradiator and an infrared detector, or to include an infrared irradiator and an eye tracking camera. The eye tracking sensor may obtain information about the eye including the size of the pupil by photographing the user's eye.

In an embodiment of the present disclosure, the eye tracking sensor may provide the processor 820 with an image obtained by photographing the user's eye including the pupil and the iris.

A specific method, performed by the extended reality device according to an embodiment of the present disclosure, of obtaining the gaze information of both eyes of the user through at least one eye tracking sensor has been described above with reference to FIGS. 5 to 7, and thus a redundant description will be omitted.

The processor 820 according to an embodiment of the present disclosure may determine an output range of the first modeling data or the third modeling data based on the obtained gaze information by executing the instructions or program code of the modeling data output module 856.

The output range may refer to a degree of outputting the first modeling data or the second modeling data.

For example, the processor 820 according to an embodiment of the present disclosure may determine the output range to output only the contour of the face included in the first modeling data or the third modeling data based on the gaze information by executing the instructions or program code of the modeling data output module 856.

For example, the processor 820 according to an embodiment of the present disclosure may determine the output range to output the first modeling data or the second modeling data with a lower resolution based on the gaze information by executing the instructions or program code of the modeling data output module 856.

For example, the processor 820 according to an embodiment of the present disclosure may determine the output range to output the contour of the face, the eyes, and the nose among the data included in the first modeling data or the third modeling data based on the gaze information by executing the instructions or program code of the modeling data output module 856. However, the present disclosure is not limited thereto.

The processor 820 according to an embodiment of the present disclosure may set a first virtual line 910 in which the gaze direction of the user is set to 0°, a second virtual line 920 located on the left side of the first virtual line 910 and in contact with the end point of the first virtual line 910, and a third virtual line 930 located on the right side of the first virtual line 910 and in contact with the end point of the first virtual line 910 by executing the instructions or program code of the modeling data output module 856.

At least one of angles 940 and 950 formed by the first virtual line 910 and the second virtual line 920 or formed by the first virtual line 910 and the third virtual line 930 may be changed based on a user input.

When there is no user input, the angle 940 formed by the first virtual line 910 and the second virtual line 920 and the angle 950 formed by the first virtual line 910 and the third virtual line 930 may each be set to about 15°, as default setting values.

The processor 820 according to an embodiment of the present disclosure may determine the output range to output all of the first modeling data or the third modeling data when the counterpart extended reality device is present between the second virtual line and the third virtual line based on the gaze information 960, by executing the instructions or program code of the modeling data output module 856.

The processor 820 according to an embodiment of the present disclosure may determine the output range to output only a part of the first modeling data or the third modeling data when the counterpart extended reality device is present outside the second virtual line or the third virtual line based on the gaze information by executing the instructions or program code of the modeling data output module 856.

For example, when the counterpart extended reality device is located on the right side with respect to the third virtual line, the processor 820 according to an embodiment of the present disclosure may determine the output range to output, at a lower resolution, the contour of the face among the information included in the first modeling data or the third modeling data 980, by executing the instructions or program code of the modeling data output module 856.

For example, when the counterpart extended reality device is located on the left side of the second virtual line, the processor 820 according to an embodiment of the present disclosure may determine the output range to output only the contour of the face among the information included in the first modeling data or the third modeling data 970, by executing the instructions or program code of the modeling data output module 856. However, the present disclosure is not limited thereto.

The processor 820 according to an embodiment of the present disclosure may output the first modeling data or the third modeling data on at least one display according to the determined output range by executing the instructions or program code of the modeling data output module 856.

Referring again to FIG. 8,
the processor 820 according to an embodiment of the present disclosure may identify whether there is a mutual agreement on the transmission and reception of at least one of the gaze information of the external user or the second modeling data with the counterpart extended reality device by executing the instructions or program code stored in the memory 850.

The second modeling data may include modeling data including the facial expression of the external user and the gaze information of the external user or modeling data including the facial expression of the external user.

The processor 820 according to an embodiment of the present disclosure may recognize the counterpart extended reality device based on the at least one camera 830 that faces forward by executing the instructions or program code stored in the memory 850.

The processor 820 according to an embodiment of the present disclosure may recognize an identifier included in the counterpart extended reality device by executing the instructions or program code stored in the memory 850. Here, the identifier may refer to an image in the form of code including a pattern located on the front surface of the counterpart extended reality device. The identifier may include, for example, at least one of a quick response (QR) code or an Aruco marker, but is not limited thereto.

The processor 820 according to an embodiment of the present disclosure may allocate an identifier to the counterpart extended reality device by executing the instructions or program code stored in the memory 850.

The processor 820 according to an embodiment of the present disclosure may obtain distance information between the at least one camera 830 and the counterpart extended reality device through the at least one camera 830 by executing the instructions or program code stored in the memory 850.

The processor 820 according to an embodiment of the present disclosure may allocate an identifier to the counterpart extended reality device based on the obtained distance information by executing the instructions or program code stored in the memory 850.

For example, assuming that the front of the camera 830 of the extended reality device 800 according to an embodiment of the present disclosure is 0°, when the counterpart extended reality device is present at an angle of 30° to the left and a distance of about 1 m, the processor 820 according to an embodiment of the present disclosure may allocate the identifier of "first counterpart extended reality device" to the counterpart extended reality device located at an angle of 30° to the left and a distance of about 1 m, by executing the instructions or program code stored in the memory 850.

The processor 820 according to an embodiment of the present disclosure may recognize each of a plurality of counterpart extended reality devices by executing the instructions or program code stored in the memory 850.

The processor 820 according to an embodiment of the present disclosure may recognize each of the counterpart extended reality devices based on at least one of the QR code or the Aruco marker, by executing the instructions or program code stored in the memory 850.

The processor 820 according to an embodiment of the present disclosure may allocate an identifier to each of the counterpart extended reality devices by executing the instructions or program code stored in the memory 850.

The processor 820 according to an embodiment of the present disclosure may obtain distance information between the at least one camera 830 and each of the counterpart extended reality devices through the at least one camera 830 by executing the instructions or program code stored in the memory 850.

The processor 820 according to an embodiment of the present disclosure may allocate an identifier to each of the counterpart extended reality devices based on the obtained distance information by executing the instructions or program code stored in the memory 850.

For example, assuming that the front of the camera 830 of the extended reality device 800 according to an embodiment of the present disclosure is 0° in the presence of a plurality of counterpart extended reality devices, when the first counterpart extended reality device is located at an angle of 30° to the left and a distance of about 1 m, and the second counterpart extended reality device is located at an angle of 30° to the right and a distance of about 2 m, the processor 820 according to an embodiment of the present disclosure may allocate the identifier of "relative extended reality device counterpart extended reality device 1" to the first counterpart extended reality device located at an angle of 30° to the left and a distance of about 1 m, and the identifier of "counterpart extended reality device 2" to the second counterpart extended reality device located at an angle of 30° to the right and a distance of about 2 m, respectively, by executing the instructions or program code stored in the memory 850.

The mutual agreement refers to a case in which there is a user's consent to reception of at least one of the gaze information of the external user or the second modeling data by the counterpart extended reality device, and there is an external user's consent to transmission of at least one of the gaze information of the external user or the second modeling data to the counterpart extended reality device.

The mutual agreement between the extended reality device 800 according to an embodiment of the present disclosure and the counterpart extended reality device may be performed by the communication interface 840 included in the extended reality device 800 according to an embodiment of the present disclosure and the counterpart extended reality device.

The communication interface 840 may communicate with an external device or a server through at least one wired or wireless communication network. The communication interface 840 according to an embodiment may include at least one short-range communication module performing communication according to communication standards such as Bluetooth, Wi-Fi, BLE, NFC/ RFID, Wi-Fi direct, UWB, or ZIGBEE, and a long-range communication module performing communication with a server for supporting long-range communication according to a long-range communication standard. The long-range communication module may perform communication through a communication network conforming to the 3G, 4G, and/or 5G communication standards or a network for Internet communication.

The processor 820 according to an embodiment of the present disclosure may output a notification message for obtaining a user input regarding whether to receive at least one of the gaze information of both eyes of the external user or the second modeling data when the counterpart extended reality device is recognized by executing the instructions or program code stored in the memory 850.

In an embodiment of the present disclosure, the processor 820 may output a notification message for obtaining a user input regarding whether to receive at least one of the gaze information of both eyes of the external user or the second modeling data through the display, by executing the instructions or program code stored in the memory 850. However, the present disclosure is not limited thereto.

In an embodiment of the present disclosure, the extended reality device 800 may further include a speaker (not shown), and the processor 820 may output a notification message for obtaining a user input regarding whether to receive at least one of the gaze information of both eyes of the external user or the second modeling data, as a voice message, through the speaker by executing the instructions or program code stored in the memory 850. However, the present disclosure is not limited thereto.

The processor 820 according to an embodiment of the present disclosure may obtain a user input for the output notification message by executing the instructions or program code stored in the memory 850.

The user input may include, for example, at least one of a gaze direction of the user, a voice of the user, or a hand motion of the user, but is not limited thereto.

The processor 820 according to an embodiment of the present disclosure may obtain information about whether the external user wearing the counterpart extended reality device agrees to transmit at least one of the gaze information of both eyes of the external user or the second modeling data through the communication interface 840 by executing the instructions or program code stored in the memory 850.

Accordingly, the processor 820 according to an embodiment of the present disclosure may identify a mutual agreement on transmission and reception of at least one of gaze information of both eyes of the external user or the second modeling data with the counterpart extended reality device through the communication interface 840 by executing the instructions or program code stored in the memory 850.

The modeling data output module 856 may further include instructions or program code related to a function and/or an operation of outputting an image of an external user wearing the counterpart extended reality device or a virtual image set by the user to the display 810 when the mutual agreement on the transmission and reception of the gaze information of both eyes of the external user and the mutual agreement on the transmission and reception of the second modeling data with the counterpart extended reality device are not identified.

The processor 820 according to an embodiment of the present disclosure may output, by executing the instructions or program code of the modeling data output module 856, an image of an external user wearing the counterpart extended reality device or a virtual image set by the user, to the display 810, when the mutual agreement on transmission and reception of the gaze information of both eyes of the counterpart extended reality device and the external user and the mutual agreement on transmission and reception of the second modeling data are not identified.

The case where the mutual agreement is not identified may refer to a case where there is a non-agreement of at least one of the user or the external user with respect to the transmission and reception of the second modeling data and the gaze information of both eyes of the external user.

The user may store the virtual image in the memory 850 according to an embodiment of the present disclosure.

The virtual image set by the user may refer to an image stored in the memory 850 according to an embodiment of the present disclosure.

The virtual image may refer to an image including a human face. The virtual image may include, for example, at least one of a computer graphic image including a human face or an avatar including a human face, but is not limited thereto. The human face may include all of eyes, a nose, a mouth, ears, and the like included in the human face.

The user may store a customized virtual image based on a user's setting in the memory included in the extended reality device according to an embodiment of the present disclosure.

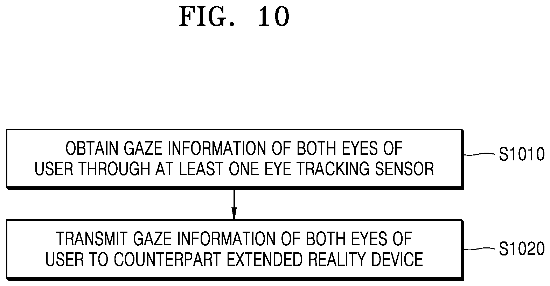

FIG. 10 is a flowchart illustrating an operating method of an extended reality device according to an embodiment of the present disclosure.

In operation 1010, the extended reality device may obtain gaze information of both eyes of the user through at least one eye tracking sensor.

The gaze information of both eyes of the user may include at least one of a position of the user's eyeball or a gaze direction of the user, but is not limited thereto.

A method of obtaining gaze information of both eyes of a user through at least one eye tracking sensor in an extended reality device according to an embodiment of the present disclosure has been described above with reference to FIGS. 5 to 7, and thus a redundant description will be omitted.

In operation 1020, the extended reality device may transmit the gaze information of both eyes of the user to the counterpart extended reality device.

The extended reality device according to an embodiment of the present disclosure may transmit the gaze information of both eyes of the user to the counterpart extended reality device through the communication interface.

The counterpart extended reality device may refer to an extended reality device worn by an external user who interacts with a user wearing the extended reality device according to an embodiment of the present disclosure.

The external user may refer to a user wearing the counterpart extended reality device.

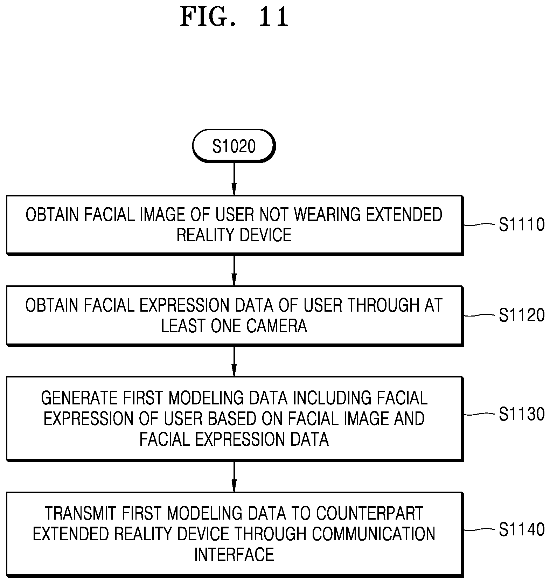

FIG. 11 is a flowchart illustrating an operating method of an extended reality device according to an embodiment of the present disclosure.

Operation 1020 of FIG. 11 corresponds to operation 1020 of FIG. 10.

In operation 1110, the extended reality device may obtain a facial image of a user not wearing the extended reality device.

The user may capture an image of the user's own face through a camera in an electronic device of the user connected in a wired or wireless manner to the extended reality device according to an embodiment of the present disclosure.

Here, the electronic device of the user wirelessly connected to the extended reality device according to an embodiment may refer to the electronic device of the user connected to the extended reality device based on at least one of Bluetooth or Wi-Fi direct according to an embodiment of the present disclosure, but is not limited thereto.

The electronic device of the user refers to an electronic device that supports a wired or wireless connection with the extended reality device according to an embodiment of the present disclosure. The electronic device of the user may include, for example, at least one of a cell phone, a digital camera, or a tablet PC supporting a wired or wireless connection, but is not limited thereto.

The user may store the user's own facial image captured through the user's electronic device in the memory included in the extended reality device according to an embodiment of the present disclosure.

The user may store a virtual image in the memory included in the extended reality device according to an embodiment of the present disclosure. The virtual image may refer to an image including a human face.

The virtual image may include, for example, at least one of a computer graphic image including a human face or an avatar including a human face, but is not limited thereto. The human face may include all of eyes, a nose, a mouth, ears, and the like included in the human face.

The user may store a customized virtual image based on a user's setting in the memory included in the extended reality device according to an embodiment of the present disclosure.

The extended reality device according to an embodiment of the present disclosure may obtain a user's facial image through the at least one camera included in the extended reality device according to an embodiment of the present disclosure facing the user's face.

In operation 1120, the extended reality device may obtain facial expression data of the user through the at least one camera.

The camera according to an embodiment of the present disclosure is configured to obtain an image by photographing a real world around the extended reality device. The camera may obtain an image frame such as a still image or a video through an image sensor when an application requiring an image capturing function is executed. The camera may include, for example, at least one of an RGB camera, a depth camera, or a TOF camera, but is not limited thereto.

The extended reality device 200 according to an embodiment of the present disclosure may obtain an FOV based on at least one of a still image or an image frame obtained from at least one camera.

The facial expression data of the user may refer to a change in a facial structure according to a change in the facial expression of the user.

The change in the facial structure may include, for example, a change in the height of the mouth corners or the position of an eyebrow when the user makes a smiling expression, but is not limited thereto.

The change in the facial structure may include, for example, at least one of a change in the height of the mouth corners when the user makes a crying expression, but is not limited thereto.

Referring to FIG. 3, the extended reality device according to an embodiment of the present disclosure may include the at least one downward camera facing downward to photograph an object located downward with respect to the extended reality device according to an embodiment of the present disclosure.

The extended reality device according to an embodiment of the present disclosure may obtain facial expression data of the user expressed below the extended reality device according to an embodiment of the present disclosure through the at least one downward camera.

For example, the facial expression data of the user may include a change in mouth size when the user laughs with a mouth open, and a change in the height of the mouth corners when the user cries, but is not limited thereto.

For example, when the user speaks, the facial expression data of the user may include at least one of a change in the mouth size, but is not limited thereto.

The extended reality device according to an embodiment of the present disclosure may obtain facial expression data of the user through at least one camera included in the extended reality device according to an embodiment of the present disclosure facing the user's face.

For example, when the user laughs, the extended reality device may obtain at least one of a position of an eyebrow, a size of an eye, a change in wrinkles around the eyes, or a movement between eyebrows.

For example, when the user is crying, the extended reality device may obtain at least one of a position of an eyebrow, a size of an eye, a change in wrinkles around the eyes, or a movement between eyebrows. However, the present disclosure is not limited thereto.

When the user wears the extended reality device according to the embodiment of the present disclosure, the extended reality device according to the embodiment of the present disclosure may store change data of a facial structure according to a change in the facial expression of the user in the memory.

The extended reality device according to an embodiment of the present disclosure may output a guide message that allows the user to make various facial expressions.

The extended reality device according to an embodiment of the present disclosure may output a guide message that allows the user to make various facial expressions through the display unit, but is not limited thereto.

The extended reality device according to an embodiment of the present disclosure may output a guide message that allows a user to make various facial expressions, as a voice message, through a speaker. However, the present disclosure is not limited thereto.

When the user makes a facial expression according to the output guide message, the extended reality device according to an embodiment of the present disclosure may store facial expression data according to the facial expression of the user corresponding to the guide message in the memory.

For example, when the extended reality device according to an embodiment of the present disclosure outputs "Smile" (guide message) to the display, the user may make a smiling face. The extended reality device according to an embodiment of the present disclosure may store facial expression data related to a smiling facial expression of a user in the memory.

The extended reality device according to an embodiment of the present disclosure may obtain facial expression data of the user through a microphone included in the extended reality device according to an embodiment of the present disclosure.

The extended reality device according to an embodiment of the present disclosure may receive a user's speech input through a microphone.

The extended reality device according to an embodiment of the present disclosure may convert the received user's speech input into text.

The extended reality device according to an embodiment of the present disclosure may convert the received speech input of the user into text based on the AI model.

The AI technology is a technology that performs an operation through a neural network to perform processing, such as analysis and/or classification, of input data, thereby obtaining a desired result.

Such AI technology may be implemented using an algorithm. Here, an algorithm or a set of algorithms for implementing the AI technology is referred to as a neural network. Here, the neural network may receive input data, perform an operation for the above-described analysis and/or classification, and output result data. As such, in order for the neural network to accurately output the result data corresponding to the input data, it is necessary to train the neural network. Here, "training" may refer to training a neural network by inputting various data into the neural network such that the neural network may discover or learn by itself a method of analyzing the input data, a method of classifying the input data, and/or a method of extracting features necessary for generating result data from the input data. Specifically, through the training process, the neural network may be trained using training data (e.g., a plurality of different images) to optimize and set weight values inside the neural network. In addition, by learning the input data by itself through a neural network having optimized weight values, a desired result is output.

Specifically, the neural network may be classified as a deep neural network when the number of hidden layers, which are internal layers performing an operation, is plural, that is, when the depth of the neural network performing the operation increases. Examples of the neural network include CNN, DNN, RNN, RBM, DBN, BRDNN, deep Q-networks, and the like, but are not limited thereto. In addition, the neural network may be subdivided. For example, the CNN neural network may be subdivided into a deep convolution neural network (DCNN) or a Capsnet neural network.

In the disclosed embodiment, an "AI model" may refer to a neural network including at least one layer that operates to receive input data and output a desired result. In addition, the "AI model" may refer to an algorithm or a set of a plurality of algorithms that performs an operation through a neural network to output a desired result, a processor for executing the algorithm or the set thereof, software for executing the algorithm or the set thereof, or hardware for executing the algorithm or the set thereof.

The neural network may be trained by receiving training data. In addition, the trained neural network may receive input data through an input end, and analyze the input data and perform an operation for outputting output data, which is a desired result through an output end. The operation through the neural network may be performed through a hidden layer. The hidden layer may be formed of a plurality of layers.

The extended reality device according to an embodiment of the present disclosure may convert the received user's speech input into text based on an ASR model.

The ASR model is a speech recognition model that recognizes a user's speech, and may refer to a model trained to convert a speech input received from a user into text and output the text. In an embodiment of the present disclosure, the ASR model may be an AI model including an acoustic model, a pronunciation dictionary, and a language model. In an embodiment of the present disclosure, the ASR model may be an end-to-end speech recognition model having a structure including an integrated neural network without separately including an acoustic model, a pronunciation dictionary, and a language model. By using the integrated neural network, the end-to-end ASR model may convert a speech signal into text without a process of recognizing a phoneme from the speech signal and then converting the phoneme into text.

The extended reality device according to an embodiment of the present disclosure may store text expressing a human facial expression in the memory as an LUT.

For example, the extended reality device according to an embodiment of the present disclosure may label a text "happy" as (1,1) and store it in the table, label a text "funny" as (1,2) and store it in the table, or label a text "sad" as (2,1) and store it in the table. However, the present disclosure is not limited thereto.

The extended reality device according to an embodiment of the present disclosure may store facial expression data corresponding to text representing a facial expression stored as a table in the memory.

For example, when the text "funny" is labeled as (1,2) and stored in the table, the extended reality device according to an embodiment of the present disclosure may store, in the memory, facial expression data related to the smiling facial expression of the user obtained through at least one camera.

For example, when the text "sad" is labeled as (2,1) and stored in the table, the extended reality device according to an embodiment of the present disclosure may store, in the memory, facial expression data related to the sad facial expression of the user obtained through at least one camera. However, the present disclosure is not limited thereto.

The extended reality device according to an embodiment of the present disclosure may match a text converted from a received speech input with a table stored in the memory.

The extended reality device according to an embodiment of the present disclosure may obtain facial expression data of the user based on the converted text and the facial expression data stored in the table.

For example, when the extended reality device according to an embodiment of the present disclosure labels the text "happy" as (1,1) and stores it in the table, and the text converted from the user's speech input includes the expression "happy", the extended reality device according to an embodiment of the present disclosure may match the converted text to (1,1). The extended reality device according to an embodiment of the present disclosure may obtain facial expression data of the user corresponding to (1,1) of the table stored in the memory. However, the present disclosure is not limited thereto.

In operation 1130, the extended reality device may generate first modeling data including the facial expression of the user based on the obtained facial image and facial expression data of the user.

The extended reality device according to an embodiment of the present disclosure may generate first modeling data including a facial expression of a user based on rendering from a facial image and facial expression data of the user.

Rendering may refer to converting a two-dimensional image into a three-dimensional image.

The extended reality device according to an embodiment of the present disclosure may store a general facial muscle model of a human in the memory.

The extended reality device according to an embodiment of the present disclosure may map a facial image of a user not wearing the extended reality device according to an embodiment of the present disclosure to a facial muscle model stored in the memory.

The extended reality device according to an embodiment of the present disclosure may map the facial image of the user not wearing the extended reality device according to an embodiment of the present disclosure to a facial muscle model stored in the memory based on an AI model.

The extended reality device according to an embodiment of the present disclosure may map a muscle that induces a change in the facial expression of the user in the facial image of the user not wearing the extended reality device according to an embodiment of the present disclosure to a facial muscle model stored in the memory.

For example, the extended reality device according to an embodiment of the present disclosure may map corrugators that form wrinkles in the middle of the forehead and induce a change in eyebrows in the obtained user's facial image to the corrugators of the facial muscle model.

For example, the extended reality device according to an embodiment of the present disclosure may map orbicularis oculi muscles that induce the operation of closing or opening the eyes in the obtained user's facial image to orbicularis oculi muscles of the facial muscle model.

For example, the extended reality device according to an embodiment of the present disclosure may map zygomaticus minor muscles or zygomaticus major muscles that induce a change in the mouth corners in the obtained user's facial image to zygomaticus minor muscles or zygomaticus major muscles of the facial muscle model, respectively.

For example, the extended reality device according to an embodiment of the present disclosure may map depressor anguli oris muscles that induce a change in the mouth corners in the obtained user's facial image to depressor anguli oris muscles of the facial muscle model.

However, the method of mapping the user's facial image to the facial muscle model by the extended reality device according to the embodiment of the present disclosure described above is merely an embodiment, and the present disclosure is not limited thereto.

The extended reality device according to an embodiment of the present disclosure may synthesize the user's facial image into the facial muscle model based on mapping muscles that induce facial expression of the user changes in the user's facial image to the facial muscle model stored in the memory.

Synthesizing may refer to combining a user's facial image with a facial muscle model.

Synthesizing may be performed based on at least one of a method of forming layers by overlapping a plurality of images, for example, a plurality of user's facial images and a facial muscle model, and synthesizing the layers by adjusting transparency of each of the layers, a method of segmenting the user's facial image into parts, for example, eyes, nose, or mouth and synthesizing the segmented parts into a facial muscle model, or an AI model-based synthesizing method, but is not limited thereto.

The extended reality device according to the embodiment of the present disclosure may obtain the first modeling data based on the facial muscle model to which the facial image is mapped and the obtained facial expression data of the user.

When the facial structure is changed according to a change in the facial expression of the user, the extended reality device according to an embodiment of the present disclosure may control the movement of at least one muscle included in the facial muscle model to which the muscle of the facial image inducing a change in the facial structure is mapped.

The extended reality device according to an embodiment of the present disclosure may generate the first modeling data including the facial expression of the user by controlling the movement of at least one muscle included in the facial muscle model to which the muscles of the facial image inducing the change of the facial structure are mapped.

In operation 1140, the extended reality device may transmit the first modeling data to the counterpart extended reality device.

The extended reality device according to an embodiment of the present disclosure may transmit the first modeling data to the counterpart extended reality device through the communication interface.

The extended reality device according to an embodiment of the present disclosure may generate second modeling data including the gaze information of both eyes of the user based on the first modeling data and the gaze information.

Referring to operation 1130, the extended reality device according to an embodiment of the present disclosure may generate first modeling data including the facial expression of the user by controlling the movement of at least one muscle included in the facial muscle model to which the muscles of the facial image inducing the change of the facial structure are mapped.

The extended reality device according to an embodiment of the present disclosure may determine the positions of the user's eyeballs from the obtained gaze information of both eyes.

The extended reality device according to an embodiment of the present disclosure may identify the positions of the user's eyeballs in the first modeling data based on the determined positions of the user's eyeballs.

The extended reality device according to an embodiment of the present disclosure may synthesize both eyes of the user including the gaze information of the user at the positions of the user's eyeballs identified in the first modeling data.

Synthesizing may be performed by at least one of a method of forming layers by overlapping a plurality of images, for example, a plurality of images of both eyes of the user, at the positions of the user's eyeballs identified in the first modeling data, and synthesizing the layers by adjusting transparency of each of the layers, a method of segmenting the images of both eyes of the user into parts, for example, a pupil, an iris, or a white, and synthesizing the segmented parts at the positions of the user's eyeballs identified in the first modeling data, or an AI model-based synthesizing method, but is not limited thereto

The extended reality device according to an embodiment of the present disclosure may transmit the second modeling data to the counterpart extended reality device.

The extended reality device according to an embodiment of the present disclosure may transmit the second modeling data to the counterpart extended reality device through the communication interface.

The extended reality device according to an embodiment of the present disclosure may recognize a mutual agreement on transmission and reception of at least one of the gaze information of both eyes of the user, the first modeling data, or the second modeling data with the counterpart extended reality device.

The counterpart extended reality device may refer to an extended reality device worn by an external user who interacts with a user wearing the extended reality device according to an embodiment of the present disclosure.

The external user may refer to a user wearing the counterpart extended reality device.

The extended reality device according to an embodiment of the present disclosure may recognize the counterpart extended reality device based on at least one camera facing forward included in the extended reality device according to an embodiment of the present disclosure.

The extended reality device according to an embodiment of the present disclosure may recognize an identifier included in the counterpart extended reality device. Here, the identifier may refer to an image in the form of code including a pattern located on the front surface of the counterpart extended reality device. The identifier may include, for example, at least one of a quick response (QR) code or an Aruco marker, but is not limited thereto.

The extended reality device according to an embodiment of the present disclosure may allocate an identifier to the counterpart extended reality device.

The extended reality device according to an embodiment of the present disclosure may obtain distance information between the at least one camera of the extended reality device of the present disclosure and the counterpart extended reality device through the at least one camera.

The extended reality device according to an embodiment of the present disclosure may allocate an identifier to the counterpart extended reality device based on the obtained distance information.

For example, assuming that the front of the camera of the extended reality device according to an embodiment of the present disclosure is 0°, when the counterpart extended reality device is present at an angle of 30° to the left and a distance of about 1 m, the identifier of the "first counterpart extended reality device" may be allocated to the counterpart extended reality device located at an angle of 30° to the left and a distance of about 1 m.

The extended reality device according to an embodiment of the present disclosure may recognize a plurality of counterpart extended reality devices, respectively.

For example, the extended reality device according to an embodiment of the present disclosure may recognize each of the plurality of counterpart extended reality devices based on at least one of a QR code or an Aruco marker.

The extended reality device according to an embodiment of the present disclosure may allocate an identifier to each of the plurality of counterpart extended reality devices.

The extended reality device according to an embodiment of the present disclosure may obtain distance information between the at least one camera of the extended reality device of the present disclosure and each of the counterpart extended reality devices through the at least one camera.

The extended reality device according to an embodiment of the present disclosure may allocate an identifier to each of the counterpart extended reality devices based on the obtained distance information.

For example, assuming that the front of the camera of the extended reality device according to an embodiment of the present disclosure is 0° in the presence of a plurality of counterpart extended reality devices, when the first counterpart extended reality device is located at an angle of 30° to the left and a distance of about 1 m and the second extended reality device is located at an angle of 30° to the right and a distance of about 2 m, the identifier of "counterpart extended reality device 1" may be allocated to the first counterpart extended reality device located at an angle of 30° to the left and a distance of about 1 m, and the identifier of "counterpart extended reality device 2" may be allocated to the second counterpart extended reality device located at an angle of 30° to the right and a distance of about 2 m, respectively.

The extended reality device according to an embodiment of the present disclosure may perform a mutual agreement on transmission and reception of at least one of the recognized at least one counterpart extended reality device, the gaze information of both eyes of the user, the first modeling data, or the second modeling data with the recognized at least one counterpart extended reality device.

Here, the mutual agreement may mean that there is a user's consent regarding the transmission of at least one of the gaze information of both eyes of the user, the first modeling data, or the second modeling data by the extended reality device 200 according to an embodiment of the present disclosure to the counterpart extended reality device, and an external user's consent to reception of at least one of the gaze information of both eyes of the user, the first dimensional modeling data, or the second modeling data.

The mutual agreement between the extended reality device and the counterpart extended reality device according to an embodiment of the present disclosure may be performed by a communication interface included in the extended reality device according to an embodiment of the present disclosure and the counterpart extended reality device.

The communication interface may communicate with an external device or a server through at least one wired or wireless communication network. The communication interface according to an embodiment may include at least one short-range communication module performing communication according to communication standards such as Bluetooth, Wi-Fi, BLE, NFC/ RFID, Wi-Fi direct, UWB, or ZIGBEE, and a long-range communication module performing communication with a server for supporting long-range communication according to a long-range communication standard. The long-range communication module may perform communication through a communication network conforming to the 3G, 4G, and/or 5G communication standards or a network for Internet communication.

When the counterpart extended reality device is recognized, the extended reality device according to an embodiment of the present disclosure may output a notification message for obtaining a user input regarding whether to transmit at least one of the gaze information of both eyes of the user, the first modeling data, or the second modeling data.

The extended reality device according to an embodiment of the present disclosure may output a notification message for obtaining a user input regarding whether to transmit at least one of the gaze information of both eyes of the user, the first modeling data, or the second modeling data through the display unit. However, the present disclosure is not limited thereto.

The extended reality device according to an embodiment of the present disclosure may output a notification message for obtaining a user input regarding whether to transmit at least one of the gaze information of both eyes of the user, the first modeling data, or the second modeling data, as a voice message, through the speaker. However, the present disclosure is not limited thereto.

The extended reality device according to an embodiment of the present disclosure may obtain a user input for the output notification message.

The user input may include, for example, at least one of a gaze direction of the user, a voice of the user, or a hand motion of the user, but is not limited thereto.

The extended reality device according to an embodiment of the present disclosure may obtain information about whether the external user wearing the counterpart extended reality device agrees to receive at least one of the gaze information of both eyes of the user, the first modeling data, or the second modeling data through the communication interface.

Accordingly, the extended reality device according to an embodiment of the present disclosure may recognize a mutual agreement on transmission and reception of at least one of the gaze information of both eyes of the user, the first modeling data, or the second modeling data with the counterpart extended reality device through the communication interface.

As the mutual agreement on transmission and reception of at least one of the gaze information of both eyes of the user, the first modeling data, or the second modeling data with the counterpart extended reality device is recognized, the extended reality device according to an embodiment of the present disclosure may transmit at least one of the gaze information of both eyes of the user, the first modeling data, or the second modeling data to the counterpart extended reality device through the communication interface.

When the extended reality device according to an embodiment of the present disclosure transmits the first modeling data to the counterpart extended reality device, the extended reality device according to an embodiment of the present disclosure may transmit the user's gaze information obtained through at least one eye tracking sensor to the counterpart extended reality device.

Accordingly, it is possible to efficiently use limited resources in data transmission and reception between the extended reality device according to an embodiment of the present disclosure and the counterpart extended reality device.

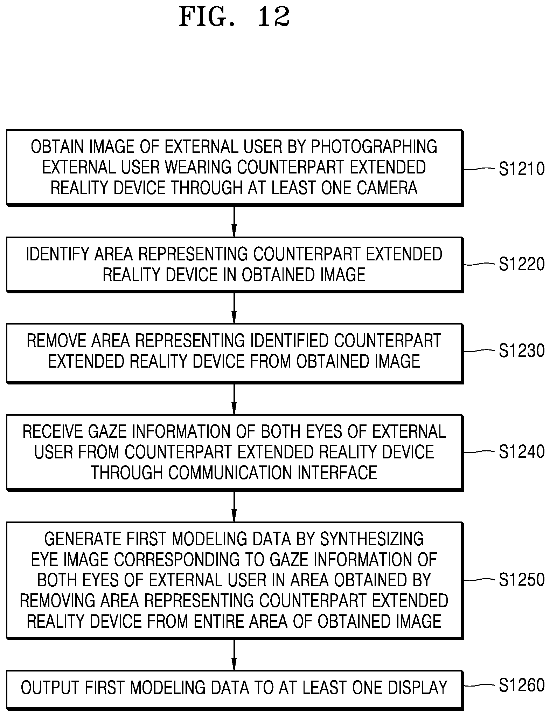

FIG. 12 is a flowchart illustrating an operating method of an extended reality device according to an embodiment of the present disclosure.

In operation 1210, the extended reality device may obtain an image of an external user wearing the counterpart extended reality device through at least one camera.

The extended reality device according to an embodiment of the present disclosure may obtain an image of an external user wearing the counterpart extended reality device by photographing the external user through at least one camera.

The counterpart extended reality device may refer to an extended reality device worn by an external user who interacts with a user wearing the extended reality device according to an embodiment of the present disclosure. The external user may refer to a user wearing the counterpart extended reality device.

In operation 1220, the extended reality device may identify, within the obtained image, an area representing the counterpart extended reality device.

The extended reality device according to an embodiment of the present disclosure may obtain device information corresponding to the counterpart extended reality device from device information pre-stored in the memory.

The extended reality device according to an embodiment of the present disclosure may obtain device information corresponding to the counterpart extended reality device included in the obtained image of the external user by controlling at least one camera from the device information stored in the memory.

The device information stored in the memory may be changed by the user.

The device information may refer to at least one of model information of the extended reality device, size information of the extended reality device, external shape information of the extended reality device, or color information of the extended reality device. However, the present disclosure is not limited thereto.

The extended reality device according to an embodiment of the present disclosure may obtain at least one of model information, size information, external shape information, or color information of the counterpart extended reality device based on the obtained device information corresponding to the counterpart extended reality device. However, the present disclosure is not limited thereto.

The extended reality device according to an embodiment of the present disclosure may identify an area indicated by the counterpart extended reality device in the image of the external user based on the obtained device information corresponding to the counterpart extended reality device.

The extended reality device may obtain location information about the area in which an image representing the counterpart extended reality device is located in the image of the external user.

The location information may include location information where the counterpart extended reality device is located on the face of an external user wearing the counterpart extended reality device.

The extended reality device according to an embodiment of the present disclosure may detect the external shape of the counterpart extended reality device through at least one camera. The external shape of the counterpart extended reality device may refer to an edge of the counterpart extended reality device.

For example, the extended reality device according to an embodiment of the present disclosure may detect the external shape of the counterpart extended reality device based on a difference between the face color of the external user and the color of the counterpart extended reality device through at least one camera.

For example, the extended reality device according to an embodiment of the present disclosure may detect the external shape of the counterpart extended reality device based on segmentation. Segmentation may refer to clustering pixels of an image into a predetermined number of groups. However, the above-described example is merely an embodiment, and the present disclosure is not limited thereto.

The extended reality device according to an embodiment of the present disclosure may obtain location information about the area where an image representing the counterpart extended reality device is located in an image of an external user based on the detected external shape of the counterpart extended reality device.

In operation 1230, the extended reality device may remove the area representing the identified counterpart extended reality device from the obtained image of the external user.

The extended reality device according to an embodiment of the present disclosure may remove an image area representing the counterpart extended reality device from the image of the external user based on the location information.

The extended reality device according to an embodiment of the present disclosure may detect the external shape of the counterpart extended reality device through at least one camera.

Here, the external shape of the counterpart extended reality device may refer to an edge of the counterpart extended reality device.

The extended reality device according to an embodiment of the present disclosure may remove the image area representing the counterpart extended reality device from the image of the external user based on the detected external shape of the counterpart extended reality device.

In operation 1240, the extended reality device may receive gaze information of both eyes of the external user from the counterpart extended reality device.

The extended reality device according to an embodiment of the present disclosure may receive gaze information of both eyes of the external user from the counterpart extended reality device through a communication interface.

In operation 1250, the extended reality device may generate first modeling data by synthesizing an eye image corresponding to the gaze information of both eyes of the external user in an area obtained by removing the area representing the counterpart extended reality device from the entire area of the obtained image.

The gaze information may include at least one of a position of the user's eyeball or a gaze direction of the user, but is not limited thereto.

Synthesizing may be performed based on at least one of a method of forming layers by overlapping eye images corresponding to the gaze information of both eyes of the external user in an area obtained by removing the area representing the counterpart extended reality device from the entire area of the obtained image or an AI model-based synthesizing method, but is not limited thereto.

In operation 1260, the extended reality device may output the first modeling data to at least one display.

The extended reality device according to an embodiment of the present disclosure may render both eyes of the eye image in a direction corresponding to the gaze direction of the external user obtained from the gaze information of both eyes of the external user.

Rendering may refer to converting a two-dimensional image into a three-dimensional image.

The extended reality device according to an embodiment of the present disclosure may receive the second modeling data from the counterpart extended reality device.

The extended reality device according to an embodiment of the present disclosure may receive the first modeling data from the counterpart extended reality device through the communication interface.

Here, the second modeling data may refer to modeling data including the facial expression of the external user.

The extended reality device according to an embodiment of the present disclosure may generate the third modeling data by synthesizing the second modeling data in an area obtained by removing the area representing the counterpart extended reality device from the entire area of the obtained image of the external user.

Synthesizing may refer to combining the second modeling data with the image area from which the counterpart extended reality device is removed.

Synthesizing may be performed by at least one of a method of forming layers by overlapping a plurality of images, for example, a plurality of second modeling data, and an area from which the counterpart extended reality device is removed, and adjusting transparency of each of the layers, a method of segmenting facial image the user's facial image included in the second modeling data into parts, for example, eyes, nose, or mouth, and synthesizing the segmented parts at a position from which the counterpart extended reality device is removed, or an AI model-based synthesizing method, but is not limited thereto.

The extended reality device according to an embodiment of the present disclosure may generate third modeling data in which the counterpart extended reality device is replaced with the first modeling information in the image of the external user, based on the obtained location information and the second modeling data.

The extended reality device according to an embodiment of the present disclosure may output the generated third modeling data to at least one display.

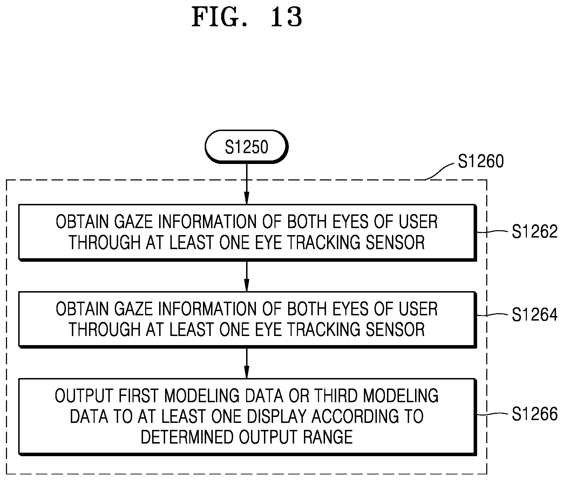

FIG. 13 is a flowchart illustrating an operating method of an extended reality device according to an embodiment of the present disclosure.

Operations 1250 and 1260 of FIG. 13 correspond to operations 1250 and 1260 of FIG. 12, respectively

In operation 1262, the extended reality device may obtain gaze information of both eyes of a user through at least one eye tracking sensor.

The gaze information may include at least one of a position of the user's eyeball or a gaze direction of the user, but is not limited thereto.

A specific method, performed by the extended reality device according to an embodiment of the present disclosure, of obtaining the gaze information of both eyes of the user through at least one eye tracking sensor has been described above with reference to FIGS. 5 to 7, and thus a redundant description will be omitted.

In operation 1264, the extended reality device may determine an output range of the first modeling data or the third modeling data based on the obtained gaze information.

The output range may refer to a degree of outputting the first modeling data or the third modeling data including the facial expression and gaze information of the external user.

For example, the extended reality device according to an embodiment of the present disclosure may determine the output range to output only the contour of the face included in the first modeling data or the third modeling data based on the gaze information.

For example, the extended reality device according to an embodiment of the present disclosure may determine the output range to output the first modeling data or the third modeling data with a lower resolution based on the gaze information.

For example, the extended reality device according to an embodiment of the present disclosure may determine the output range to output the contour of the face, the eyes, and the nose among the data included in the first modeling data or the third modeling data based on the gaze information. However, the present disclosure is not limited thereto.

The extended reality device according to an embodiment of the present disclosure may set a first virtual line in which the gaze direction of the user is set to 0°, a second virtual line located to the left of the first virtual line in contact with an end point of the first virtual line, and a third virtual line located to the right of the first virtual line in contact with the end point of the first virtual line.

At least one of an angle formed by the first virtual line and the second virtual line or an angle formed by the first virtual line and the third virtual line may be changed based on a user input.

When there is no user input, the angle formed by the first virtual line and the second virtual line and the angle formed by the first virtual line and the third virtual line may be set to about 15° as default setting values.

The extended reality device according to an embodiment of the present disclosure may determine an output range to output all of the first modeling data or the third modeling data when there is a counterpart extended reality device between the second virtual line and the third virtual line based on the gaze information.

When the counterpart extended reality device is present outside the second virtual line and the third virtual line based on the gaze information, the extended reality device according to an embodiment of the present disclosure may determine an output range to output some or all of the first modeling data or the third modeling data.

For example, when the counterpart extended reality device is located on the right side with respect to the third virtual line, the extended reality device according to an embodiment of the present disclosure may determine the output range to output the contour of the face with a lower resolution among the information included in the first modeling data or the third modeling data.

For example, when the counterpart extended reality device is located on the left side of the second virtual line, the extended reality device according to an embodiment of the present disclosure may determine an output range to output only the contour of the face among the information included in the first modeling data or the third modeling data. However, the present disclosure is not limited thereto.

In operation 1266, the extended reality device may output the first modeling data or the third modeling data to at least one display according to the determined output range.

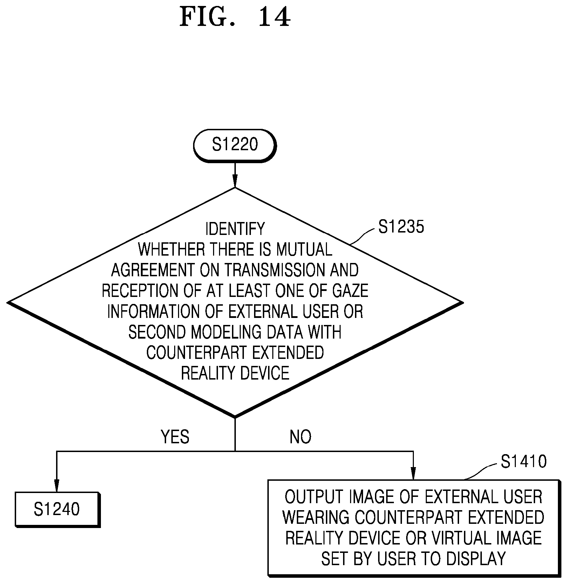

FIG. 14 is a flowchart illustrating an operating method of an extended reality device according to an embodiment of the present disclosure.

Operations 1220 and 1240 of FIG. 14 correspond to operations 1220 and 124 of FIG. 12, respectively

In operation 1235, the extended reality device may identify whether there is a mutual agreement on the transmission and reception of at least one of the gaze information of the external user or the second modeling data with the counterpart extended reality device.

The second modeling data may include modeling data including the facial expression of the external user and the gaze information of the external user or modeling data including the facial expression of the external user.

The extended reality device according to an embodiment of the present disclosure may recognize the counterpart extended reality device based on at least one camera facing forward included in the extended reality device according to an embodiment of the present disclosure.

The extended reality device according to an embodiment of the present disclosure may recognize an identifier included in the counterpart extended reality device. Here, the identifier may refer to an image in the form of code including a pattern located on the front surface of the counterpart extended reality device. The identifier may include, for example, at least one of a quick response (QR) code or an Aruco marker, but is not limited thereto.

The extended reality device according to an embodiment of the present disclosure may allocate an identifier to the counterpart extended reality device.

The extended reality device according to an embodiment of the present disclosure may obtain distance information between the at least one camera of the extended reality device of the present disclosure and the counterpart extended reality device through the at least one camera.

The extended reality device according to an embodiment of the present disclosure may allocate an identifier to the counterpart extended reality device based on the obtained distance information.

For example, assuming that the front of the camera of the extended reality device according to an embodiment of the present disclosure is 0°, when the counterpart extended reality device is present at an angle of 30° to the left and a distance of about 1 m, the extended reality device according to an embodiment of the present disclosure may allocate the identifier of "first counterpart extended reality device" to the counterpart extended reality device located at an angle of 30° to the left and a distance of about 1 m.

The extended reality device according to an embodiment of the present disclosure may recognize a plurality of counterpart extended reality devices.

For example, the extended reality device according to an embodiment of the present disclosure may recognize a plurality of counterpart extended reality devices based on at least one of a QR code or an Aruco marker.

The extended reality device according to an embodiment of the present disclosure may allocate an identifier to each of a plurality of counterpart extended reality devices.

The extended reality device according to an embodiment of the present disclosure may obtain distance information between the at least one camera of the extended reality device of the present disclosure and a plurality of counterpart extended reality devices through the at least one camera.

The extended reality device according to an embodiment of the present disclosure may allocate an identifier to each of the counterpart extended reality devices based on the obtained distance information.

For example, assuming that the front of the camera of the extended reality device according to an embodiment of the present disclosure is 0° in the presence of a plurality of counterpart extended reality devices, when the first counterpart extended reality device is located at an angle of 30° to the left and a distance of about 1 m and the second extended reality device is located at an angle of 30° to the right and a distance of about 2 m, the extended reality device according to an embodiment of the present disclosure may allocate the identifier of "counterpart extended reality device 1" to the first counterpart extended reality device located at an angle of 30° to the left and a distance of about 1 m, and allocate the identifier of "counterpart extended reality device 2" to the second counterpart extended reality device located at an angle of 30° to the right and a distance of about 2 m, respectively.

The mutual agreement refers to a case where there is a user's consent to receive at least one of the gaze information of both eyes of the external user or the second modeling data from the counterpart extended reality device, and there is a user's consent to transmit at least one of the gaze information of both eyes of the external user or the second modeling data.

The mutual agreement between the extended reality device and the counterpart extended reality device according to an embodiment of the present disclosure may be performed by a communication interface included in the extended reality device and the counterpart extended reality device according to an embodiment of the present disclosure.

The communication interface may communicate with an external device or a server through at least one wired or wireless communication network. The communication interface according to an embodiment may include at least one short-range communication module performing communication according to communication standards such as Bluetooth, Wi-Fi, BLE, NFC/ RFID, Wi-Fi direct, UWB, or ZIGBEE, and a long-range communication module performing communication with a server for supporting long-range communication according to a long-range communication standard. The long-range communication module may perform communication through a communication network conforming to the 3G, 4G, and/or 5G communication standards or a network for Internet communication.

When the counterpart extended reality device is recognized, the extended reality device according to an embodiment of the present disclosure may output a notification message for obtaining a user input regarding whether to receive at least one of the gaze information of both eyes of the external user or the second modeling data.

The extended reality device according to an embodiment of the present disclosure may output a notification message for obtaining a user input regarding whether to receive at least one of the gaze information of both eyes of the external user or the second modeling data through the display unit. However, the present disclosure is not limited thereto.

The extended reality device according to an embodiment of the present disclosure may output a notification message for obtaining a user input regarding whether to receive at least one of the gaze information of both eyes of the external user or the second modeling data, as a voice message, through a speaker. However, the present disclosure is not limited thereto.

The extended reality device according to an embodiment of the present disclosure may obtain a user input for the output notification message.

The user input may include, for example, at least one of a gaze direction of the user, a voice of the user, or a hand motion of the user, but is not limited thereto.

The extended reality device according to an embodiment of the present disclosure may obtain information about whether the external user wearing the counterpart extended reality device agrees to transmit at least one of the gaze information of both eyes of the external user or the second modeling data through the communication interface.

Accordingly, the extended reality device according to an embodiment of the present disclosure may identify a mutual agreement on transmission and reception of at least one of the gaze information of both eyes of the external user or the second modeling data with the counterpart extended reality device through the communication interface.

In operation 1410, when the mutual agreement on the transmission and reception of the gaze information of both eyes of the external user and the mutual agreement on the transmission and reception of the second modeling data with the counterpart extended reality device are not identified, the extended reality device may output an image of the external user wearing the counterpart extended reality device or a virtual image set by the user to the display.

The case where the mutual agreement is not identified may refer to a case where there is a non-agreement of at least one of the user or the external user with respect to the transmission and reception of the second modeling data and the gaze information of both eyes of the external user.

The user may store the virtual image in the memory included in the extended reality device according to an embodiment of the present disclosure.

The virtual image set by the user may refer to an image stored in the memory of the extended reality device according to an embodiment of the present disclosure.

The virtual image may refer to an image including a human face. The virtual image may include, for example, at least one of a computer graphic image including a human face or an avatar including a human face, but is not limited thereto. The human face may include all of eyes, a nose, a mouth, ears, and the like included in the human face.

The user may store a customized virtual image based on a user's setting in the memory included in the extended reality device according to an embodiment of the present disclosure.

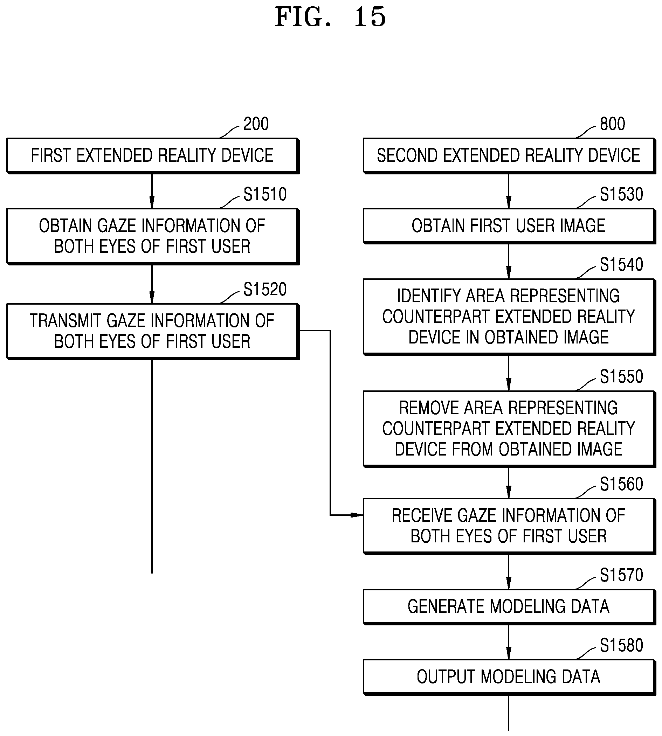

FIG. 15 is a flowchart illustrating an operating method of a first extended reality device and a second extended reality device according to an embodiment of the present disclosure.

In operation 1510, the first extended reality device 200 may obtain gaze information of both eyes of the first user through at least one eye tracking sensor.

The first user may refer to a user who controls the first extended reality device 200.

In operation 1520, the first extended reality device 200 may transmit the obtained gaze information of both eyes of the first user to the second extended reality device 800 according to an embodiment of the present disclosure.

In operation 1530, the second extended reality device 800 may obtain an image of the first user wearing the first extended reality device 200 through at least one camera.

In operation 1540, the second extended reality device 800 may identify, within the obtained image of the first user, an area representing the counterpart extended reality device.

In operation 1550, the second extended reality device 800 may remove the area representing the identified counterpart extended reality device from the obtained image of the first user.

In operation 1560, the second extended reality device 800 may receive the gaze information of both eyes of the first user from the first extended reality device 200.

The second extended reality device 800 according to an embodiment of the present disclosure may receive the gaze information of both eyes of the first user from the first extended reality device 200 according to an embodiment of the present disclosure through the communication interface.

In operation 1570, the second extended reality device 800 may generate modeling data by synthesizing an eye image corresponding to the gaze information of both eyes of the external user in an area obtained by removing the area representing the counterpart extended reality device from the entire area of the obtained image of the first user.

In operation 1580, the second extended reality device 800 may output the modeling data to at least one display.

Operations 1510, 1520, 1530, 1540, 1550, 1560, 1570, and 1580 may be performed by the extended reality device according to an embodiment of the present disclosure.

Hereinafter, a case in which a user wearing an extended reality device according to an embodiment of the present disclosure gazes at a mirror will be described as an example.

The extended reality device according to an embodiment of the present disclosure may recognize an identifier included in the extended reality device according to an embodiment of the present disclosure reflected on a mirror surface.

The extended reality device according to an embodiment of the present disclosure may obtain an image of a user reflected on the mirror surface.

The extended reality device according to an embodiment of the present disclosure may identify an area representing the extended reality device according to an embodiment of the present disclosure in the obtained image.

The extended reality device according to an embodiment of the present disclosure may remove an area identified as the area representing the extended reality device according to an embodiment of the present disclosure from the obtained image.

The extended reality device according to an embodiment of the present disclosure may obtain gaze information of both eyes of a user through at least one eye tracking sensor.

The extended reality device according to an embodiment of the present disclosure may generate modeling data by synthesizing an eye image corresponding to the gaze information of both eyes of the user in an area obtained by removing the area representing the extended reality device according to an embodiment of the present disclosure from the entire area of the obtained image.

The extended reality device according to an embodiment of the present disclosure may output the generated modeling data to at least one display.

Accordingly, the user may check the user's own external shape before interacting with the external user from the output third modeling data.

An extended reality device according to an embodiment of the present disclosure may include at least one display, at least one camera, a communication interface configured to perform data communication with a counterpart extended reality device, a memory storing at least one instruction, and at least one processor configured to execute the at least one instruction stored in the memory.

The at least one processor may be further configured to execute the at least one instruction to obtain an image of an external user wearing the counterpart extended reality device by controlling the at least one camera to capture an image of the external user.

The at least one processor may be further configured to execute the at least one instruction to identify, within the obtained image, an area representing the counterpart extended reality device.

The at least one processor may be further configured to execute the at least one instruction to remove the area representing the identified counterpart extended reality device from the image.

The at least one processor may be further configured to execute the at least one instruction to receive gaze information of both eyes of the external user from the counterpart extended reality device by controlling the communication interface.

The at least one processor may be further configured to execute the at least one instruction to generate first modeling data by synthesizing an eye image corresponding to the gaze information of both eyes of the external user in an area obtained by removing the area representing the counterpart extended reality device from the entire area of the image.

The at least one processor may be further configured to execute the at least one instruction to output the first modeling data to the at least one display.

The at least one processor may be further configured to execute the at least one instruction to render both eyes of the eye image in a direction corresponding to a gaze direction of the external user obtained from the gaze information of both eyes of the external user.

The at least one processor may be further configured to execute the at least one instruction to obtain device information corresponding to the counterpart extended reality device from device information pre-stored in the memory.

The at least one processor may be further configured to execute the at least one instruction to receive second modeling data from the counterpart extended reality device by controlling the communication interface.

The at least one processor may be further configured to execute the at least one instruction to generate third modeling data by synthesizing second modeling data in an image area obtained by removing the area representing the counterpart extended reality device from the entire area of the image.

The at least one processor may be further configured to execute the at least one instruction to output the third modeling data to the at least one display.

The second modeling data may include a facial expression of the external user.

The extended reality device according to an embodiment of the present disclosure may further include at least one eye tracking sensor.

The at least one processor may be further configured to execute the at least one instruction to obtain gaze information of both eyes of the user by controlling the at least one eye tracking sensor.

The at least one processor may be further configured to execute the at least one instruction to determine an output range of the first modeling data or the third modeling data based on the gaze information.

The at least one processor may be further configured to execute the at least one instruction to output the first modeling data or the third modeling data to the at least one display 810 according to the determined output range.

The at least one processor may be further configured to execute the at least one instruction to identify a mutual agreement on transmission and reception of at least one of gaze information of both eyes of the external user or the second modeling data with the counterpart extended reality device.

The at least one processor may be further configured to execute the at least one instruction to output an image of an external user wearing the counterpart extended reality device or a virtual image set by a user to the at least one display when the mutual agreement on the transmission and reception of the gaze information of both eyes of the external user and the mutual agreement on the transmission and reception of the second modeling data are not identified with the counterpart extended reality device.

An extended reality device according to an embodiment of the present disclosure may include at least one eye tracking sensor, a communication interface configured to perform data communication with a counterpart extended reality device, a memory storing at least one instruction, and at least one processor configured to execute the at least one instruction stored in the memory.

The at least one processor may be further configured to execute the at least one instruction to obtain gaze information of both eyes of a user by controlling the at least one eye tracking sensor.

The at least one processor may be further configured to execute the at least one instruction to transmit the gaze information of both eyes of the user to the counterpart extended reality device by controlling the communication interface.

The extended reality device according to an embodiment of the present disclosure may further include at least one camera.

The at least one processor may be further configured to execute the at least one instruction to obtain a facial image of a user not wearing the extended reality device.

The at least one processor may be further configured to execute the at least one instruction to obtain facial expression data of the user by controlling the at least one camera.

The at least one processor may be further configured to execute the at least one instruction to generate first modeling data including the facial expression of the user based on the facial image and the facial expression data.

The at least one processor may be further configured to execute the at least one instruction to transmit the first modeling data to the counterpart extended reality device by controlling the communication interface.

The first modeling data may include modeling data obtained based on a virtual facial image set by the user and the facial expression data of the user.

The at least one processor may be further configured to execute the at least one instruction to generate second modeling data including the gaze information of both eyes of the user based on the first modeling data and the gaze information.

The at least one processor may be further configured to execute the at least one instruction to control the communication interface 250 to transmit the second modeling data to the counterpart extended reality device.

The at least one processor may be further configured to execute the at least one instruction to recognize a mutual agreement on transmission and reception of at least one of the gaze information of both eyes of the user, the first modeling data, or the second modeling data with the counterpart extended reality device.

An operating method of an extended reality device, according to an embodiment of the present disclosure, may include obtaining an image of an external user wearing a counterpart extended reality device by photographing the external user through at least one camera.

The operating method of the extended reality device, according to an embodiment of the present disclosure, may include identifying, within the obtained image, an area representing the counterpart extended reality device.

The operating method of the extended reality device, according to an embodiment of the present disclosure, may include removing the area representing the identified counterpart extended reality device from the image.

The operating method of the extended reality device, according to an embodiment of the present disclosure, may include receiving gaze information of both eyes of the external user from the counterpart extended reality device through a communication interface.

The operating method of the extended reality device, according to an embodiment of the present disclosure, may include generating first modeling data by synthesizing an eye image corresponding to the gaze information of both eyes of the external user in an area obtained by removing the area representing the counterpart extended reality device from the entire area of the image.

The operating method of the extended reality device, according to an embodiment of the present disclosure, may include outputting the first modeling data to the at least one display.

The operating method of the extended reality device, according to an embodiment of the present disclosure, may include rendering both eyes of the eye image in a direction corresponding to a gaze direction of the external user obtained from the gaze information of both eyes of the external user.

The operating method of an extended reality device, according to an embodiment of the present disclosure, may include obtaining device information corresponding to the counterpart extended reality device from device information pre-stored in the memory.

The operating method of the extended reality device, according to an embodiment of the present disclosure, may include receiving second modeling data from the counterpart extended reality device through the communication interface.

The operating method of the extended reality device, according to an embodiment of the present disclosure, may include generating third modeling data by synthesizing the second modeling data in an image area obtained by removing the area representing the counterpart extended reality device from the entire area of the image.

The operating method of the extended reality device, according to an embodiment of the present disclosure, may include outputting the third modeling data to the at least one display.

The second modeling data may include a facial expression of the external user.

The operating method of an extended reality device, according to an embodiment of the present disclosure, may include obtaining gaze information of both eyes of a user through at least one eye tracking sensor.

The operating method of the extended reality device, according to an embodiment of the present disclosure, may include transmitting gaze information of both eyes of the user to the counterpart extended reality device through the communication interface.

The operating method of an extended reality device, according to an embodiment of the present disclosure, may include obtaining a facial image of a user not wearing the extended reality device.

The operating method of the extended reality device, according to an embodiment of the present disclosure, may include obtaining facial expression data of the user through at least one camera.

The operating method of the extended reality device, according to an embodiment of the present disclosure, may include generating first modeling data including an expression of the user based on the facial image and the expression data.

The operating method of the extended reality device, according to an embodiment of the present disclosure, may include transmitting the first modeling data to the counterpart extended reality device through the communication interface.

The first modeling data may include modeling data obtained based on a virtual facial image set by the user and the facial expression data of the user.

The operating method of the extended reality device, according to an embodiment of the present disclosure, may include generating second modeling data including the gaze information of both eyes of the user based on the first modeling data and the gaze information.

The operating method of the extended reality device, according to an embodiment of the present disclosure, may include transmitting the second modeling data to the counterpart extended reality device through the communication interface.

The operating method of the first extended reality device, according to an embodiment of the present disclosure, may include obtaining gaze information of both eyes of the first user through at least one eye tracking sensor.

The operating method of the first extended reality device, according to an embodiment of the present disclosure, may include transmitting the gaze information of both eyes of the first user to the second extended reality device.

The operating method of the second extended reality device, according to an embodiment of the present disclosure, may include obtaining an image of the first user wearing the first extended reality device through at least one camera.

The operating method of the second extended reality device, according to an embodiment of the present disclosure, may include identifying an area representing the first extended reality device in the obtained image.

The operating method of the second extended reality device, according to an embodiment of the present disclosure, may include removing the area representing the identified first extended reality device from the image.

The operating method of the second extended reality device, according to an embodiment of the present disclosure, may include receiving gaze information of both eyes of the first user from the first extended reality device.

The operating method of the second extended reality device, according to an embodiment of the present disclosure, may include generating modeling data by synthesizing an eye image corresponding to the gaze information of both eyes of the first user in an area obtained by removing the area representing the first extended reality device from the entire area of the obtained image.

The operating method of the second extended reality device, according to an embodiment of the present disclosure, may include outputting the modeling data to at least one display.

The operating method of the extended reality device, according to an embodiment of the present disclosure, may be implemented in the form of program instructions that are executable through various computer means and recorded in a computer-readable medium. The computer-readable medium may include program instructions, data files, data structures, and the like alone or in combination. The program instructions recorded on the medium may be specially designed and configured for the present disclosure or may be known and available to those skilled in the art of computer software. Examples of the computer-readable recording medium include magnetic media such as a hard disk, a floppy disk, and a magnetic tape, optical media such as CD-ROM and DVD, magneto-optical media such as a floptical disk, and hardware devices specially configured to store and execute program instructions, such as ROM, RAM, and a flash memory. Examples of the program instructions include not only machine language code such as those generated by a compiler, but also high-level language code that is executable by a computer using an interpreter or the like.

In addition, the operating method of the extended reality device according to the disclosed embodiments may be provided by being included in a computer program product. The computer program product may be traded between a seller and a buyer as a commodity.

The computer program product may include a software (S/W) program and a computer-readable storage medium in which the S/W program is stored. For example, the computer program product may include a product (e.g., a downloadable app) in the form of an S/W program electronically distributed through a manufacturer of an electronic device or an electronic market (e.g., Google Play Store or App Store). For electronic distribution, at least a part of the S/W program may be stored in a storage medium or temporarily generated. In this case, the storage medium may be a storage medium of a server of a manufacturer, a server of an electronic market, or a relay server that temporarily stores the SW program.

In a system including a server and a client device, the computer program product may include a storage medium of the server or a storage medium of the client device. Alternatively, when there is a third device (e.g., a smartphone) communicatively connected to the server or the client device, the computer program product may include a storage medium of the third device. Alternatively, the computer program product may include the S/W program itself transmitted from the server to the client device or the third device or transmitted from the third device to the client device.

In this case, one of the server, the client device, and the third device may execute the computer program product to perform the method according to the disclosed embodiments. Alternatively, two or more of the server, the client device, and the third device may execute the computer program product to perform the methods according to the disclosed embodiments in a distributed manner.

For example, a server (e.g., a cloud server or an AI server) may control a client device communicatively connected to the server to perform the method according to the disclosed embodiments by executing a computer program product stored in the server.

Although the embodiments have been described in detail above, the scope of the present disclosure is not limited thereto, and various modifications and improvements by those skilled in the art using the basic concept of the present disclosure defined in the following claims also belong to the scope of the present disclosure.

## Claims

1. An extended reality device (800) comprising:
at least one display (810);
at least one camera (830);
a communication interface (840) configured to perform data communication with a counterpart extended reality device;
a memory (850) storing at least one instruction; and
at least one processor (820) configured to execute the at least one instruction stored in the memory (850),
wherein the at least one processor (820) is further configured to:
obtain an image of an external user wearing the counterpart extended reality device by controlling the at least one camera (830) to capture an image of the external user;
identify, within the obtained image, an area representing the counterpart extended reality device;
remove the area representing the identified counterpart extended reality device from the image;
receive, by controlling the communication interface (840), gaze information of both eyes of the external user from the counterpart extended reality device;
generate first modeling data by synthesizing an eye image corresponding to the gaze information of both eyes of the external user in an area obtained by removing the area representing the counterpart extended reality device from an entire area of the image; and
output the first modeling data to the at least one display (810).

2. The extended reality device of claim 1, wherein the at least one processor (820) is further configured to
render both eyes of the eye image in a direction corresponding to a gaze direction of the external user obtained from the gaze information of both eyes of the external user.

3. The extended reality device of claim 1 or 2, wherein the at least one processor (820) is further configured to
obtain device information corresponding to the counterpart extended reality device from device information pre-stored in the memory (850).

4. The extended reality device of any one of claims 1 to 3, wherein the at least one processor (820) is further configured to:
receive, by controlling the communication interface (840), second modeling data from the counterpart extended reality device;
generate third modeling data by synthesizing the second modeling data in the image area obtained by removing the area representing the counterpart extended reality device from the entire area of the image; and
output the third modeling data to the at least one display (810),
wherein the second modeling data comprises a facial expression of the external user.

5. An extended reality device (200) comprising:
at least one eye tracking sensor (210);
a communication interface (250) configured to perform data communication with a counterpart extended reality device;
a memory (240) storing at least one instruction; and
at least one processor (230) configured to execute the at least one instruction stored in the memory (240),
wherein the at least one processor (230) is further configured to:
obtain gaze information of both eyes of a user by controlling the at least one eye tracking sensor (210); and
transmit the gaze information of both eyes of the user to the counterpart extended reality device by controlling the communication interface (250).

6. The extended reality device of claim 5, further comprising
at least one camera,
wherein the at least one processor (230) is further configured to:
obtain a facial image of a user not wearing the extended reality device;
obtain facial expression data of the user by controlling the at least one camera;
generate first modeling data including a facial expression of the user, based on the facial image and the facial expression data; and
transmit the first modeling data to the counterpart extended reality device by controlling the communication interface (250),
wherein the first modeling data comprises modeling data obtained based on a virtual facial image set by the user and the facial expression data of the user.

7. The extended reality device of claim 5 or 6, wherein the at least one processor is further configured to:
generate second modeling data including the gaze information of both eyes of the user, based on the first modeling data and the gaze information; and
transmit the second modeling data to the counterpart extended reality device by controlling the communication interface (250).

8. An operating method of an extended reality device, the operating method comprising:
obtaining an image of an external user wearing a counterpart extended reality device by photographing the external user through at least one camera (S1210);
identifying, within the obtained image, an area representing the counterpart extended reality device (S1220);
removing the area representing the identified counterpart extended reality device from the image (S1230);
receiving gaze information of both eyes of the external user from the counterpart extended reality device through a communication interface (S1240);
generating first modeling data by synthesizing an eye image corresponding to the gaze information of both eyes of the external user in an area obtained by removing the area representing the counterpart extended reality device from an entire area of the image (S1250); and
outputting the first modeling data to the at least one display (S1260),
wherein the counterpart extended reality device performs data communication with the extended reality device through the communication interface.

9. The operating method of claim 8, wherein the generating of the first modeling data (S1250) comprises
rendering both eyes of the eye image in a direction corresponding to a gaze direction of the external user obtained from the gaze information of both eyes of the external user.

10. The operating method of claim 8 or 9, wherein the identifying of the area representing the counterpart extended reality device (S1220) comprises
obtaining device information corresponding to the counterpart extended reality device from device information pre-stored in a memory.

11. The operating method of any one of claims 8 to 10, wherein the outputting of the first modeling data (S1260) comprises:
receiving second modeling data from the counterpart extended reality device through the communication interface;
generating third modeling data by synthesizing second modeling data in an image area obtained by removing the area representing the counterpart extended reality device from the entire area of the image; and
outputting the third modeling data to the at least one display,
wherein the second modeling data comprises a facial expression of the external user.

12. An operating method of an extended reality device, the operating method comprising:
obtaining gaze information of both eyes of a user through at least one eye tracking sensor (S1010); and
transmitting the gaze information of both eyes of the user to a counterpart extended reality device through a communication interface (S1020),
wherein the counterpart extended reality device performs data communication with the extended reality device through the communication interface.

13. The operating method of claim 12, further comprising:
obtaining a facial image of a user not wearing the extended reality device (S1110);
obtaining facial expression data of the user through at least one camera (S1120);
generating first modeling data including a facial expression of the user, based on the facial image and the facial expression data (S1130); and
transmitting the first modeling data to the counterpart extended reality device through the communication interface (S1140),
wherein the first modeling data comprises modeling data obtained based on a virtual facial image set by the user and the facial expression data of the user.

14. The operating method of claim 12 or 13, further comprising:
generating second modeling data including the gaze information of both eyes of the user, based on the first modeling data and the gaze information; and
transmitting the second modeling data to the counterpart extended reality device through the communication interface.

15. A computer-readable recording medium having recorded thereon a program for executing the method of any one of claims 8 to 14 on a computer.
